(19) Europäisches Patentamt
European Patent Office
Office européen des brevets

(11) EP 1 133 722 B1

(12) **EUROPEAN PATENT SPECIFICATION**

(45) Date of publication and mention of the grant of the patent:
**12.03.2003 Bulletin 2003/11**

(21) Application number: **99960327.7**

(22) Date of filing: **15.11.1999**

(51) Int Cl.$^7$: **G06F 3/14**

(86) International application number:
**PCT/US99/26943**

(87) International publication number:
**WO 00/029935 (25.05.2000 Gazette 2000/21)**

# (54) METHOD FOR DISPLAY WITH COLOUR FIDELITY OF IMAGES TRANSMITTED IN A NETWORK

VERFAHREN ZUR FARBTREUEN ANZEIGE VON IN EINEM NETZWERK ÜBERTRAGENEN BILDERN

PROCEDE POUR PRESENTER EN HAUTE RESOLUTION DES IMAGES COULEUR TRANSMISES DANS UN RESEAU

(84) Designated Contracting States:
**AT BE CH CY DE DK ES FI FR GB GR IE IT LI LU MC NL PT SE**

(30) Priority:
**13.11.1998 US 108228 P**
**13.11.1998 US 108229 P**
**13.11.1998 US 108231 P**
**13.11.1998 US 108442 P**
**13.11.1998 US 108444 P**
**19.10.1999 US 422215**

(43) Date of publication of application:
**19.09.2001 Bulletin 2001/38**

(73) Proprietor: **Lightsurf Technologies Inc.**
**Santa Cruz, CA 95060-4527 (US)**

(72) Inventors:
- **BERNARD, Peter**
  **San Francisco, CA 94131 (US)**
- **ENGELDRUM, Peter, George**
  **Winchester, MA 01890 (US)**
- **DEUTCH, James, Ellis**
  **San Jose, CA 95132 (US)**
- **VAN PROOIJEN, Cornelis, Pieter**
  **Mill Valley, CA 94941 (US)**
- **MATTOX, Joel, D.**
  **Saratoga, CA 95070 (US)**
- **HILLIARD, William, J.**
  **San Francisco, CA 94123 (US)**
- **STROTHER, Thomas, Lawrence**
  **San Francisco, CA 94107 (US)**
- **HUBER, Jean-Pierre**
  **F-74160 Neydens (FR)**

(74) Representative: **Wombwell, Francis**
**Potts, Kerr & Co.**
**15, Hamilton Square**
**Birkenhead Merseyside CH41 6BR (GB)**

(56) References cited:
**WO-A-98/15091**

- **PATENT ABSTRACTS OF JAPAN vol. 1998, no. 13, 30 November 1998 (1998-11-30) -& JP 10 224643 A (CANON INC.), 21 August 1998 (1998-08-21)**
- **"Encrypted Username / Password support" NETSCAPE INTERNET SITE - CONSUMER ARTICLES,12 August 1998 (1998-08-12), XP002134015 Available from the Internet <http://help.netscape.com/kb/consumer/1998 0909-2.html> on 24-3-2000**
- **"Padlock" Security Indicator Does Not Work Correctly with Frames" NETSCAPE INTERNET SITE - CONSUMER ARTICLES, XP002134016 Available from the Internet <http://help.netscape.com/kb/consumer/1998 0603-2.html> on 24-3-2000**
- **FOX A ET AL: "Reducing WWW latency and bandwidth requirements by real-time distillation" COMPUTER NETWORKS AND ISDN SYSTEMS,NL,NORTH HOLLAND PUBLISHING. AMSTERDAM, vol. 28, no. 11, 1 May 1996 (1996-05-01), pages 1445-1456, XP004018241 ISSN: 0169-7552**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 133 722 B1

Printed by Jouve, 75001 PARIS (FR)

## Description

### Related Applications

This application is a continuation-in-part of copending Unites States patent application serial no. 09/422,215 filed 10/19/99 and claims the priority of provisional applications serial no. 60/108,444 filed 11/13/98, serial no. 60/108,442 filed 11/13/98, and serial no. 60/108,229 filed 11/13/98, serial no. 60/108,231, filed 11/13/98 and serial no. 60/108,228 filed 11/13/98.

### Background of the Invention

#### 1. Field of the Invention:

This invention relates to image display over a network, and more specifically to improved image color display over a network.

WO-A-98/15091 A (CASIO COMPUTER CO. LTD.) discloses a network where incoming data are sent to a user display in conformity with terminal specifications, like display size and resolution. A database of terminal specifications is stored in a host.

PATENT ABSTRACTS OF JAPAN vol. 1998, no. 13, 30 November 1998 (1998-11-30) - & JP-A-10224643 A (CANON INC.) describes a network wherein colour profiles for different monitors are stored in server hosting a picture database and sent together with the images, low resolution being selected as default if no profile is available for a given monitor.

The article by FOX A. et al.: 'Reducing WWW latency and bandwidth requirements by real-time distillation' COMPUTER NETWORKS AND ISDN SYSTEMS,NL,NORTH HOLLAND PUBLISHING. AMSTERDAM, vol. 28, no. 11, 1 May 1996 (1996-05-01), pages 1445-1456, XP004018241 ISSN: 0169-7552 proposes that images be sent by a server across a network to a determined user with a real-time, on demand compression depending on a registered user profile, a technique called "real time distillation". For example, a large colour graphic can be scaled down, or the colour depth reduced according to individual needs and preferences. The user may then request a refined image, i.e. part or all of the source document at increased or original quality. This technique allows in particular to optimize images for the client's characteristics (bandwidth, display size, colour capability, image formats) and user preferences. The user profile - if the user has chosen to fill in a profile form - is associated with the client's IP address, user-settable, and comprises characteristics of the terminal like the client's connection speed and display characteristics, as well as various user's subjective options, like the selected latency per inline image or some visualization preferences, e.g. to "omit irritating background patterns".

### Brief Description of the Drawings

Fig. 1 is a stylized block diagram of a network according to the present invention.

Fig. 2 is a flow chart of the process of the present invention.

Fig. 3A is block diagram of a network according to the present invention.

Fig. 3B is a flow chart of the process of the present invention.

Fig. 4 is block diagram of a network according to the present invention.

Fig. 5A is a flow chart of the process of the present invention.

Fig. 5B is block diagram of a network according to the present invention.

Fig. 6A is a screen view of a web page according to the present invention.

Fig. 6B is block diagram of an HTML file according to the present invention.

Fig. 7 is a block diagram of the process steps of the present invention.

Fig. 8 is a block diagram of the process steps of the present invention.

Fig. 9A is an enlarged view of an indicator according to the present invention.

Fig. 9B is an enlarged view of an alternate indicator according to the present invention.

Fig. 10 is a block diagram of an alternate embodiment according to the present invention.

Fig. 11 is a block diagram of an alternate network according to the present invention.

Fig. 12 is graph of a parameter space according to the present invention.

Fig. 13 is a parameter distribution curve according to the present invention.

Fig. 14 is a graph of display transfer functions according to the present invention.

Fig. 15 is a block diagram of a first alternate process according to the present invention.

Fig. 16 is a block diagram of a second alternate process according to the present invention.

Fig. 17 is a detailed block diagram of a network according to the present invention.

Fig. 18 is a detailed transform curve according to the present invention.

Fig. 19 is a detailed diagram of a display screen according to the present invention.

FIG. 20 is a block diagram of a computer and display including test pattern in accordance with the present invention.

FIG. 21 is a detailed depiction of the test pattern for determining the optimal viewing angle of the display shown in FIG. 1.

FIG. 22 is a graph of a tone reproduction curve for a flat panel display.

FIG. 23 is a depiction of a test pattern for determining the optimal viewing angle of a display using a plurality of backgrounds in accordance an alternative embodiment of the invention.

FIG. 24 is a depiction of a test pattern for determining the optimal viewing angle of a display by sequentially displaying the test patterns in succession in accordance with another alternative embodiment of the invention.

FIG. 25 is a flow chart illustrating a method for determining the optimal viewing angle of a display in accordance with the preferred embodiment of the invention.

FIG. 26 is a flow chart illustrating a method for determining the optimal viewing angle of a display in accordance with an alternative embodiment of the invention.

FIG. 27 is a flow chart illustrating a method for calibrating and characterizing an image capture device via a feedback loop from a known calibrated display in accordance with the preferred embodiment of the present invention.

FIG. 28 is a functional block diagram of a calibration system for image capturing devices.

The features and advantages of this invention will become apparent from the detailed description and accompanying figures that follow. In the figures and description, numerals indicate the various features of the invention, like numerals referring to like features throughout both the drawings and the description.

**Detailed Description of the Preferred Embodiment(s)**

Referring now to Fig. 1, system 10 according to the present invention provides color images from network servers to users enhanced when possible with user specific color correction information to provide high fidelity color images to the users. In particular, in accordance with a preferred embodiment of the present invention, color server 20 may provide color catalog pages for clothing or other products to a potential buyer, such as user 12, adjusted to provide high fidelity color images in accordance with the color display characteristics of display 22.

In general, system 10 may include one or more network servers and one or more users. Network servers may include color server 20, commercial server 18, and server 76. Users may include users 12, 14 and 16, interconnected to network servers using network 13. Network nodes such as color server 20 may serve as a user or client for some purposes and a server for others. System 10 does not require a static server, constantly functioning as a server, in all embodiments.

Network 13 may be any type of network such as a LAN, intranet or an internet such as the World Wide Web (WWW). Network 13 may also utilize any type of appropriate network protocol, such as HTTP as used on the World Wide Web. Color server 20 may be used to host color correctable images 50 to be made available to users of commercial or other network sites.

User 12 may be any conventional network client device and may include one or more electronic devices 24, conventionally a personal computer or workstation, and one or more display devices 22, conventionally a CRT or LCD display monitor. User 12 may also include remote storage 26 and or local storage 28 within electronic device 24. Remote storage 26 may also be available to electronic device 24 through network 13. User 12 may also include one or more output devices 30 which may be any type of printer, recorder or plotter. User 12 may also include one or more input devices 32 which may be any type of scanner, reader, image capture device or other data transfer device.

Delivery of accurate images according to the present invention begins with image request 54 sent to commercial server 18 for the display of an image on monitor 22. Image request 54 may originate with user 12 or any network device such as server 76. Image request 54 may be an individual request for a specific image, graphic, drawing, rendering or similar data file or it may be part of a larger data request such as a web page request. Commercial server 18 may respond to image request 54 by then inquiring of the source of the image request to determine if display calibration or characterization data 38 for display 22 is available.

If display calibration or characterization data 38 is available to commercial server 18, a color corrected version of image 52 may be provided to user 12 in accordance with data 38. Thus, image 52 as then displayed on display 22 may be a more accurate color representation of a reference or author image, image 56 than may otherwise be achieved. Concurrent with delivery of color corrected images, display 22 may present a visual or other indicator 58, indicating that the image or images being viewed are color corrected and accurate. Indicator 58, or a variation thereof, may also be used to indicate when images are not color corrected and or provide other information to user 12. An online shopper or other user may have increased confidence to make purchases, as a result of viewing image 52 over network 13, knowing the color of image 52 as actually viewed is accurate.

If display calibration or characterization data 38 is not available to commercial server 18, user 12 may be invited to calibrate or characterize display 22 through network 13 with or without requiring plug-ins or downloads. Without display calibration or characterization, image 52 may appear differently to users 12, 14 and 16 because of different operating systems, video cards, monitor settings and a range of other factors.

According to the present invention, process 131 as discussed below may be a one-time process, involving images 62-65 and nine user interactions that may be mouse clicks, key presses, screen contacts or other interactive inputs to electronic device 24. Process 131 may include other combinations or techniques to characterize a display system or capture other personalization data. Process 131 may generally require 1 to 2 minutes to complete, some circumstances may require more time. After completion of process 131, user 12 may receive color corrected images without further setup. Discussions throughout that refer to color correction should be understood to apply equally to gray scale correction. A characterizable and correctable network system according to the present invention may also be used to control delivery and ensure the accuracy of sounds, smells, tastes and textures.

## Data Block Sharing

Referring again to Fig. 1, calibration or characterization data 38 must be made available across multiple network domains for convenient use to correct and distribute images 40 or 42 across network 13. Some network protocols such as the HTTP protocol used on the WWW are able to store data blocks on user 12 or other network devices. Data block 34 may include many different types of information including, user preferences and user hardware characteristics. Conventional techniques providing client-resident data block storage are often referred to as providing "Cookies".

Cookie 36 may include one or more blocks of information passed from a server and stored on a user, often as a result of the collection of that information by the server from the user. Cookie 36 may then be used to provide, or retrieve, information from a user to a server. For example, user 12 information concerning domain 77 may be passed from server 76 to user 12 and stored on user 12 as cookie 66. Subsequent connection of user 12 to server 76 would prompt server 76 to request cookie 66 to remind server 76 of information about user 12. This technique is conventionally used to provide personalized settings or information specific to user 12 on server 76 without requiring server 76 to store the data information for all its users. For security purposes, conventional cookies are designed so that they cannot be shared across multiple domains. Conventional cookies may even be limited to URL ranges within a domain, as is the case with the HTTP protocol. In a conventional network, a server in a first domain cannot access cookies stored for another domain.

Conventional cookies may not therefor be useful for providing display characterization and or calibration information about a user to a server unless the cookies are specific to that server, that is, unless the server has placed the cookies on the user. In accordance with the present invention however, various techniques of server and user redirection may be used to achieve results equivalent to sharing cookies across domains.

For example, if user 12 initiates request 60 to server 76, server 76 may request data block 34 from user 12 to process request 60. Data block 34 may include personal, preference, calibration and or characterization information related to user 12. Data block 34 may also include an index to database 46 permitting information 45 to be retrieved from database 46.

Referring now to Fig. 2, a method of sharing data blocks according to a first embodiment of the present invention begins at step 90 with request 54 from a user 12. According to the present invention, users 12, 14 and 16 may exist in one of three conditions. Standard condition 89S, in which no characterization and or calibration has been performed, Correction Enabled condition 89C, in which characterization and or calibration has been performed according to the present invention, Modified condition 89M, in which characterization and or calibration has been performed not according to the present invention.

At step 91, agent 41 checks user 12 for a cookie 66.

At step 92 agent 41 determines if a cookie has been received. If no cookie is received, user 12 is bounced to color server 20 at step 93. Bouncing may be accomplished using Java script or it may be accomplished using HTTP redirect. A currently preferred embodiment of the present invention uses Java script.

If agent 41 receives cookie 66 from user 12, agent 41 and commercial server 18 have enough information to provide user 12 with color corrected information at step 99A as requested in image request 54.

At step 94 color server 20 checks user 12 for a domain 15 cookie. If no domain 15 cookie is present, user 12 is given unique identifier ID and is bounced to color server 20 at step 95. The existence of unique identifier ID signifies to agent 41 that user 12 is not characterized and or calibrated, and that corrected images may not be prepared for user 12 using existing information.

At step 96, if color server 20 detects a domain 15 cookie 66A in user 12, user 12 is bounced to commercial server 18 along with display calibration or characterization data 38.

At step 97 agent 41 drops cookie 66C to user 12. Agent 41 uses the contents of cookie 66c to provide a corrected image 52 to user 12 at step 98.

Referring again to Fig. 2, a method of sharing data blocks according to a second embodiment of the present invention begins at step 90 with request 54 from a user 12.

At step 91, agent 41 checks user 12 for a cookie 66.

At step 92 agent 41 determines if a cookie has been received. If no, user 12 is bounced to color server 20 at step 93.

If agent 41 receives cookie 66 from user 12, agent 41 and commercial server 18 have enough information to provide user 12 with color corrected information at step 99A as requested in image request 54.

At step 94Q user 12 is bounced to commercial server 18 along with domain 19 cookie 66Q. At step 95Q image request 54 is resent. At step 96Q, agent 41 detects domain 19 cookie 66Q. Commercial server 18 may use 66Q and image file 52F to provide user 12 with color corrected information at step 99Q as requested in image request 54

Referring again to Fig. 2, a method of sharing data blocks according to a third embodiment of the present invention begins at step 90 with request 54 from user 12.

At step 91, agent 41 checks user 12 for a cookie 66.

At step 92 agent 41 determines if cookie 66 or information 92I has been received. If cookie 66 is not present and information 92I is present, agent 41 becomes a user and requests characterization and or calibration information for user 12 from color server 20. Information 92I must be enough information to permit to color server 20 to recognize user 12 as the beneficiary of the surrogate client action of agent 41.

If agent 41 receives display calibration or characterization data 38 from color server 20, agent 41 drops cookie 66R to user 12. Using cookie 66R, agent 41 and commercial server 18 have enough information to provide user 12 with color corrected information at step 99A as requested in image request 54.

Nodes connected to network 13 may include various combinations of displays and electronic devices and may also include a variety of video hardware 68 and video software 70. Video hardware 68 may include video cards, boards, chips and accelerators. Video software 70 may include drivers, applets and applications.

Display calibration and or characterization data 38 does not exist for user 14 in standard condition. Thus, user 14 may not receive color corrected images according to the present invention. Request 54 from user 14, requesting image file 52F from commercial server 18 will cause agent 41 to initiate examination 82. Examination 82 may be a request for a cookie or calibration and or characterization data, and will not yield any calibration and or characterization data of any form from user 14. Agent 41 may be implemented as a software filter, an application or any other suitable technique.

User 14 has no calibration and or characterization data to return to commercial server 18. Upon receiving no calibration and or characterization data in response to examination 82, agent 41 may transmit response 43 to user 14. Response 43 may cause user 14 to transmit request 31 to color server 20. Server 20 has no calibration and or characterization data to return and may transmit response 33 to user 14. Response 33 may include a unique identifier ID to identify user 14 and cause commercial server 18 to drop a cookie 66E to user 14. Cookie 66E may be considered an empty cookie, it contains only unique identifier ID and will not allow commercial server 18 to produce corrected images to user 14.

Alternatively, missing, inadequate, corrupted or otherwise unusable calibration and or characterization data from color server 20 may initiate inquiry 35 from color server 20 to user 14. Inquiry 35 may be an invitation or other initiation to user 14 to engage in remote or local calibration and or characterization. If user 14 declines to calibrate or characterize, image 52 displayed by user 14 would be uncorrected.

User 12 may be calibrated and or characterized locally or remotely. Local calibration and or characterization is discussed in U.S. Patent No. 5,638,117 to Engeldrum & Hilliard. Remote calibration and or characterization is discussed in more detail below. After calibration and or characterization according to the present invention, display calibration or characterization data 38 may be stored locally on local storage 28 of user 12 or stored remotely in database 46 on color server 20 or as data file 72. Calibration and or characterization data 38 may be stored as cookie 66, a block of data, or some similar method using other network protocols.

Request 54 from user 12, requesting image file 52F from commercial server 18 will cause agent 41 to initiate examination 82. Examination 82 may initiate return of cookie 66 to commercial server 18 if cookie 66 was initially generated by an element within domain 19. Examination 82 may also initiate return of display calibration or characterization data 38 to commercial server 18. Return of either cookie 66 or display calibration or characterization data 38 may permit commercial server 18 to correct image file 52F for display on display 22 as image 52.

If cookie 66 was deposited by a foreign domain and is inaccessible, or display calibration or characterization data 38 is missing or inaccessible, examination 82 may return no data. Upon receiving no calibration and or characterization data in response to examination 82, agent 41 may transmit response 43 to user 12. Response 43 may cause user 12 to transmit request 31 to color server 20. Request 31 may Color server 20 may transmit response 37 to user 12 which causes user 12 to transmit data 21 to commercial server 18. Data 21 may contain display calibration or characterization data 38 and or other user profile information.

In modified condition, user 16 may have been calibrated and or characterized locally or remotely to generate a foreign calibration and or characterization file 74. Foreign calibration or characterization data 74 may be stored locally in electronic device 78 or stored remotely. Calibration and or characterization data 74 may be stored as cookie 80, a block of data, or some similar method using other network protocols. Agent 41 may detect foreign calibration and or characterization file 74 or cookie 80. Upon detection of cookie 80 or foreign calibration and or characterization file 74 agent 41 may translate the foreign files to translated data 84 to enable correction of images according to the present invention. Alternatively, agent 41 may also bounce user 16 to color server 20 along with translated data 84 to enable color server 20 to drop translated data cookie 86 onto user 16. Translation of foreign calibration and or characterization file 74 or cookie 80 may also be accomplished by color server 20.

The above process may be repeated as many times as necessary in order to satisfy requests made of a server by a client.

The domains enumerated above need not be distinct from each other. For example, a domain that has a cookie it wishes to share and the domain that distributes the cookie could be the same domain. Likewise, the domain that has a cookie to share, the domain that distributes the cookie, and the domain that requests the cookie could all be the same domain as well, data block sharing according to the present invention might be required if a domain and its cookies are partitioned by URL ranges.

The act of sending the client from one domain to another in order to retrieve information may be done using any of a multiplicity of methods including the use of a page description language including HTML or XML, by using some scripting language such as JavaScript or VBScript, or by some combination of the above. For example, HTML tables using HTTP POST or HTTP GET commands can be used in conjunction with JavaScript or VBScript to automate inter-page, and thus interdomain, transfers.

Methods of supplying the information returned by a cookie sharing server may include, but are not limited to, responses to forms, additional URL header fields, or additional cookies in a URL's domain.

## Remote Characterization

Referring now to Fig. 3A, a user of a local computer 100 may desire characterization and or calibration of one or more input/output devices such as display 102, scanner 104, other image input device 106, printer 108, plotter 110, or other image output device 112. Computer 100 may be connected via a wired or wireless network such as network 114 or directly via modem or cable or other means to a remote server 116 where software 118 and data 120 needed for characterization may be stored.

After link 122 is established between a Remote Server 116 and computer 100, either server 116 or computer 100 may request characterization and or calibration service from a remote server on behalf of computer 100. Server 116 may then initiate a characterization program 124. Characterization program 124 may send one or more characterization images 126 or test patterns to computer 100 and its associated devices 102, 104, 106, 108, 110, and 112. If the device to be characterized is an output device such as display 102, printer 108, plotter 110 or image output device 112, characterization or test image 126 may be presented to a user or a local calibration mechanism 128 using computer 100's manner of output onto the selected device.

If the device to be characterized is scanner 104, image capture device 105 or other image input device 106, characterization or test image 126 may be presented to the user or local calibration mechanism 128 using a conventional input from the device to be characterized and a conventional output onto display 102 or any other device.

Referring now to Fig. 3B, a process 131, of remotely characterizing display 102 according to the present invention begins at step 130 with a request 125 for characterization that may be initiated by computer 100 or server 116. At step 132, based upon request 125, server 116 initiates characterization program 124. At step 134, characterization program 124 through server 116 transmits image 126 or other test pattern which may then be presented to the user or local calibration mechanism 128 on display 102 or other device to be characterized. At step 136 a user or local calibration mechanism such as calibrator 128 may make one or more choices based on the image or test pattern as it appears on display 102. Choices made by a user may be made in any conventional manner as through keyboard or mouse entry or any other suitable tactile feedback device, a user may also indicate their preferences in other ways such as verbally. At step 138 the choice or choices may result in choice data 150 or other quantifiable data that may be captured locally and or communicated back to characterization program 124 on server 116 for capture.

One of the choices to be made by a user may be to select a level of thoroughness of the characterization and or calibration. Characterization program 124 may provide one or more options for device characterization including full or partial characterization, or multiple levels of characterization complexity. At step 140 characterization program 124 determines if a sufficient number of images or test patterns have been sent to computer 100, and if a sufficient number of responses have been captured to complete the level of characterization desired. In another aspect of the present invention characterization program 124 may also evaluate choice data 150 to determine if sufficient data has been received to adequately characterize computer 100 at the desired level. If insufficient data has been captured characterization program 124 may repeat process 131 from step 134 until sufficient choice data has been captured.

After choice data 150 has been transmitted to server 116, choice data 150 may be used by characterization program 124 or other electronic algorithm to create characterization file 152 about the device to be characterized.

Characterization file 152 might be used for one or more of the following applications:

send characterization file 152 to computer 100 for local usage including, but not limited to, providing operating system 101 of computer 100 with information about the color capabilities of computer 100 and/or

subsequently use characterization file 152 or other characterization information for modifying or otherwise controlling the flow of images such as still image 154 or streaming images 156 for display, output or other use by computer 100 based on the contents of characterization file 152 and/or

store characterization file 152 or other characterization information locally on a network node such as server 116 or other computers connected to server 116 and/or

send characterization file 152 or other characterization information to a third location such as server 158, and/or

feed into creation or alteration of the test patterns, images, or other calibration and characterization implement such as image 126 and/or

otherwise provide characterization file 152 or other characterization information for use by software 118, other programs, or other devices in providing images or other services to computer 100.

## REMOTE CHARACTERIZATION

Referring now to Fig. 4, in another aspect, the present invention may include a combination of client software 160 and server software 162 connected using network 164 and using suitable network protocols such as Internet protocols 166. It is expected that many individual local computers such as computer 168 may from time to time connect to any of a number of remote servers such as server 170 over a network such as network 164 which may be the Internet. At computer 168 with display 172 as the device to be characterized, a user may initiate a request such as request 174 to server 170. Server 170 may incorporate images, data, test patterns, and/or logic embodied in onto an appropriate hardware platform 178. Program 176 or other suitable characterization programs may do one or more of the following:

(a) manage communication link 180 with computer 168,
(b) select one or more appropriate characterization images and or test patterns or other test data such as image 182 to be sent to the device to be calibrated. The selection of appropriate test images may be determined by the level of complexity of characterization desired, by the hardware to be characterized, by the characteristics of the connection, or by characteristics of images to be displayed.
(c) create, change or alter existing calibration images or test pattern to send and/or change the order thereof if required,
(d) send one or more calibration images and or test patterns,
(e) collect characterization and or calibration data such as choice data 184 returned from computer 168,
(f) create characterization information such as characterization file 186 from analysis of the images or test patterns such as image 182 sent and from the responses such as choice data 184 received,
(g) store characterization file 186 on server 170 and/or connected machines such as server 171,
(h) use characterization file 186 to modify images such as image 190 or to change the flow of unmodified images such as images 192 sent to computer 168
(i) transmit characterization file 186 to other sites such as site 194 for use at those sites to provide services such as data 196, which may include programs, data and or images, to computer 168 or other purposes and/or
(j) transmit characterization file 186 to computer 168 for local usage.

For example, the present invention might be used as a technique to characterize client monitors over the Internet and to use the characterization information to color correct images sent to that client so as to provide accurate color display over the Internet.

## Correction Notification

In another aspect of the present invention, computer 168 may be provided with icon 173 over network 164 to indicate the color correction status of images on the display. This information is critical since the end user is often in a remote location, separated in time and distance from the author of the image or images, and unable to know the characteristics of the image or images being viewed. In particular, the present invention may automatically inform viewers and/or other receivers of digital images as to the state of color correction for the digital images, thus notifying a viewer of the visual integrity of the digital image being displayed. Consequently, viewers may feel assured and secure about images they see as to the color accuracy of those images.

In particular, the present invention may be implemented as a software process that may be a stand alone application or it may be loaded into either an Internet browser or server technology. A browser is a client application that enables a user to view HTML (or equivalent) documents on the web, another network, or the user's computer. The software may be implemented in the form of a small program or an applet, including Java or ActiveX application programs, that may be loaded into a web browser, such as Microsoft's Internet Explorer or Netscape's Navigator. The software may also be implemented on server technology, such as Cosmo Color from Silicon Graphics. One skilled in the art will recognize that other conventional or newly developed software processes may be used as well and the invention may be implemented using hardware or a combination of hardware and software. One skilled in the art will recognize that the invention can apply to other browser technology, such as local CD browsers and other non-Internet browsers.

Referring to Fig.'s 5A and 5B, a flowchart of process 240 for implementing the present invention through a sample network 242 is illustrated. For example, using Internet protocols, the present invention is typically enabled when browser 244 begins to reassemble web page 246 on display 248, following the hidden HTML codes or other protocols in web page 246 to determine where to place one or more elements such as element 252 which may be text, images, graphics or videos onscreen. In particular, algorithm 256 may be implemented when browser 244 begins to assemble element 252 or other part of a requested page. One skilled in the art, however, will recognize that implementation of the present invention can be initiated at anytime a page element requiring accurate color or gray scale including a graphic, image or video is present. Color or gray scale accuracy is identified here as high fidelity or identical rendition of a page element as compared to the image of the page element as viewed on the authoring display.

The technique according to the present invention initially determines whether the image has been color enabled as shown at step 241 and subsequently whether a user such as client 250 has been color characterized or corrected as shown at step 243. To detect whether an image is color enabled according to the present invention, an algorithm such as algorithm 256 may detect whether color correction information such as color specific files 258 or registry entries 260 are associated with a page element such as element 252. Color correction information may also include: (1) user specific Hypertext Markup Language (HTML) tags within the web page that designate the color properties of the source image such as tags 262, (2) standard ICC profiles such as profile 264 which may be embedded within the image file itself and (3) pointers to user specific (i.e. HTML) or standard (i.e. ICC profiles) color files associated with the image file such as color specific files 258. At step 245, algorithm 256 may determine whether network 242 is acting in accordance with steps 241 and 243 above to provide a faithful rendition of element 252.

Upon determining whether the image is color enabled at step 241 and whether client 250 has been color characterized at step 243, notification element 254 may be provided about the integrity of color imagery currently being viewed by the client at a specific web site. In particular, at step 245 when an image such as element 252 is color enabled and corrected, notification may be provided to a client such as client 250 that the color of the image is accurate. If the image is not color enabled, at step 247 notification may be provided to the client that the color of the image may not be accurate. If the client is not color characterized or calibrated, at step 249 notification may be provided to the client that the color of the image may not be accurate. Notification steps 247 and 249 may result in the same indication to client 250 or distinct notifications may be used. After notification of client 250 at either steps 245, 247 or 249, algorithm 256 may enter a standby mode until another web page with image elements is detected. Notification element 254 may be a part of web page 246 delivered from a network server or notification element 254 may be generated on device 259 for display on display 248.

In a currently preferred embodiment of the present invention algorithm 256 may detect whether a web page such as web page 246 includes predetermined HTML tags such as tags 262. For example, when a web page with an image is color enabled, the HTML tags direct a browser to display a predetermined text as a headline of a certain size, such as the title "True Internet Color™".

Referring now to Fig.'s 6A and 6B, a screen view of a web page 266 having a title "True Internet Color™" (True Internet Color™ is a trademark of E-color Inc.) in title bar 264 and HTML file 270 that created it are shown. The presence of indicator 268 such as "True Internet Color" in a tag such as tags 262 may enable algorithm 256 to recognize that images on page 266 are color enabled. Thus when a web page includes the title "True Internet Color™" the image is considered to be color enabled. The present invention is not limited to recognition of HTML tags directed at the title "True Internet Color™," but rather, indicator 268 may use any predetermined tag configuration such as HTML tag, or web image tag configuration.

| | |
|---|---|
| <html> | Marks the beginning of an HTML-coded file |
| <head> | Marks the start of the header section and may contain descriptive information not displayed onscreen such as the title and author. It may also holds formatting information, such as style sheets. |
| <title>Shop-o-rama True Internet Color(r)</title> | Sets the web page's title, displayed in the blue bar atop the screen. This also affects the displaying window's externally viewable and or detectable attributes. |
| </head> | Marks the end of the header section and may contain descriptive information not displayed onscreen such as the title and author. It may also holds formatting information, such as style sheets. |
| </html> | Marks the end of an HTML-coded file |

To determine whether an image such as page element 252 is color enabled via ICC color correction information, a system according to the present invention such may detect whether ICC profiles (for the device characteristics of the reference image as represented on the reference device) are embedded within an image file, such as element 252, based upon an ICC profile format specification. In particular, the present invention may detect data 253 stored in ICC profiles such as profiles 255, which are described in the ICC profile specification. ICC profiles such as profiles 255 are device profiles that can be used in pairs to translate color data created on one device such as device 257 into a native color space C of another device such as device 259. More specifically, an ICC profile such as profile 261 may be provided for each device such as device 257 and may be used according to the present invention to transform color image data such as element 252 from a device-dependent color space to the profile connection space, and to transform color image data from the profile connection space to another device-dependent color space. ICC profiles such as profiles 255 for the device characteristics of the reference image as represented on the reference device may be embedded in the image file such as element 252 or stored in a memory in a connected computer such as device 259. For example, the ICC profiles could be stored in a memory, accessible by a CPU, and associated with the image instead of embedded. Additionally, it should be noted that ICC profile can be accessed by the client from a variety of other sources such as network interface or from other external devices via a modem interface.

To determine whether an image is color enabled-even without an embedded or associated color profile a system according to the present invention may detect whether the image is in a known color space, such as sRGB. sRGB is a well-defined color space, includes various versions such as sRGB 64, and is further defined at http://www.srgb.com. One skilled in the art will recognize that implementation of the present invention may be used with any kinds of images, including but not limited to those subject to compression techniques, such as GIF, PNG or JPEG formatted images.

Referring to step 243, the present invention interrogates the client system to determine if that system is characterized and calibrated to the same state, or to a different but known state. In other words, the present invention detects the presence of a transfer function in the client system, i.e. in the hardware or software (or the combination of hardware/software and human perception). In particular, the present invention checks file entries and registries, or pointers to such entries and registries, to determine whether characterization parameters are present. A flag, initialized to a set value, signals whether the client system has been characterized. For example, in a typical embodiment, a binary flag initialized to a zero value is set to a non-zero value when the present invention detects the client system is characterized. In accordance with the present invention, a client may use any type of conventional or newly developed color calibration system including, for example, the interactive color calibration method disclosed in U.S. Patent No. 5,638,117.

Referring to step 16, the present invention then determines the whether the system is acting in accordance with steps 12 and 14 above to provide color accuracy. In particular, once the present invention confirms that the presence of color correction information in the displayed image (step 12) and the image has been adjusted, as needed, to display properly on the calibrated or characterized client system (step 14) (i.e. color accuracy is being provided for in step 16), a notification is displayed to the user (step 18). When the software process determines that color accurate display is occurring on all or part of the image, then an appropriate notification is made to inform the user that color correction has occurred where marked. One skilled in the art will recognize that the particular type of notification is not critical to the invention. The notification may be visual or non-visual notification (e.g. audio). For example, the visual notification may be an icon that provides users with a visible indication about the integrity of color imagery currently being viewed by the client at a specific web site. It does this by briefly flashing the cursor for a fraction of a second to indicate if whether or not the page is being viewed utilizing color correction. This icon can be implemented in addition, or instead, in the OS, in a web-enabled application, or in a browser (when implemented on as a client-side application); or it can be implemented as an image, tag, program, or watermark embedded within a web page by the web server or by any of the links between server and client within the network infrastructure.

For example, when a user requests a Web page from a web site enabled by the present invention, the HTML is sent to the client directly from the web site's main servers. A specially attached URL link calls up color-corrected images from the hosted server, and the client's browsers integrate the two pieces automatically. Thus, in accordance with the present invention, the notification not only provides notification feedback to the user, but also reinforces a message of data fidelity to the end-user in determining whether the color data is accurate or not. The present invention has applicability for any client viewing or display application where color accuracy is important to the communication of information. Examples include, but are not limited to, viewing artwork, fashion, cosmetic, logo or brand colors, paint, photography and other color-sensitive information over a medium such as the Internet where content viewer and content creator are disconnected by physical space and/or time. Although, for illustrative purposes, the present invention is described and illustrated utilizing web pages hosted on a server and displayed with color correction on a client, the invention is not limited to such a configuration. Rather, the present invention would apply equally well to images displayed on any imaging peripheral including transmissive, reflective, and other source and/or client imaging technologies. Moreover, the present invention would also apply to images not viewed by the Internet, such as images within computer applications, TV, broadcast, or other client output media of any kind, including printed output. The present method would apply to both digital images and analog images including both real and synthetic images authored for, and/or viewed on, a client system.

The present invention may be implemented as a client-based notification system 30 as shown in FIG. 7 or server-based notification system 50 as shown in FIG. 8. With respect to a client-based notification system, the present invention may be installed on a client system such as client 38, peripheral, and/or other output technology that has various states of visual display to notify the user about the state of color correction for digital images output or displayed. Referring to FIG. 7, a functional block diagram of a client-based notification system 30 for providing critical end user feedback as to the color correction status of imagery on a client display is illustrated. Client-based notification system 30 is shown with hosted color server 32, mirrored server 34, non-mirrored server 36 and clients 38, 40, 42, 44 and 46 which represent the various types of clients, that is, clients such as 38 and 40 which include the client based notification techniques of the present invention (indicated by the term "icon"), clients 38, 40, 42 and 44 which are characterized for color, clients 42 and 44 which have a known transfer function and client 46 which is not characterized, has no known color transfer function and does not include a notification system according to the present invention.

Icon 66 depicted in Fig. 9(b), provided by client 38 is preferably initiated to a non-corrected state. When client 38 sends a request to mirrored server 34, which mirrors hosted color server 32, a color corrected requested image is sent from hosted color server 32 to client 38 including a color notification tag, such as a specific HTML title bar flag. The Web page HTML from server 34 includes a color notification tag within its HTML tags to indicate in the title bar that the images to be sent by server 32 have been enabled for color correction. For example, as shown in FIG. 6A, the title bar of the web page may include a notification in its title bar, such as "True Internet Color", in addition to other terms such as the name of a related company, to indicate color correction. As noted above, one skilled in the art will recognize that the present invention is not limited to the detection of predetermined HTML title tags, rather, any device capable of detection may be used as the color notification tag. Upon arrival at the client 38, the present invention detects the color notification tag by evaluating the HTML tags sent from server 34 to determine whether the image delivered from server 32 has been color correction enabled by detecting the True Internet Color tag in the title. It also checks whether client 38 has been color characterized or calibrated to a known state. If both conditions are true, an icon such as icon 66 depicted in FIG. 9(b) is changed to a corrected state as depicted by icon 64 in FIG. 9(a). In contrast, when client 38 sends a request to a site providing non color corrected pages, such as non-mirrored server 36, which is does not include the special HTML tags, such as "True Interriet Color" to indicate color correction, then icon 66 remains unchanged from its non-corrected default state.

Still referring to FIG. 7, local client 40 is characterized but includes no applet incorporating the present invention for notification as indicated by the phrase "no-icon". Local client 40 is in direct communication with mirrored server 34 and hosted color server 32. Local client 40 provides no notification icon. When local client 40 sends a request to mirrored server 34, the requested image is color corrected and sent back by hosted color server 32, with no notification icon on client 40. When local client 40 communicates with non-mirrored server 36, the requested image is not color corrected, and there is no notification icon to this effect.

Client 42 is characterized and includes a known (characterized or calibrated) transfer function but no applet incorporating the present invention for notification. Client 42 is in direct communication with mirrored server 34 and non-mirrored server 36 and in direct communication with hosted color server 32 via redirection requests from mirrored server 34. Client 42 provides no notification icon. When client 42 sends a request to mirrored server 34, the requested image is corrected. However, no notification indicating color correction is sent back to client 42. When client 42 sends a request to non-mirrored server 36, the requested image is not color corrected and no notification of color correction is sent back to client 42. In such case, the title bar of the web page would not indicate a color corrected image.

Client 44 is characterized and includes a known (characterized or calibrated) transfer function and includes an applet incorporating the present invention for notification. Client 44 is in direct communication with mirrored server 34 and non-mirrored server 36 and in direct communication with hosted color server 32 via redirection requests from mirrored server 34. Client 44 provides a notification icon. When client 44 sends a request to mirrored server 34, the requested image sent by hosted color server 32 is color corrected. In such case, the title bar of the web page would indicate a color corrected image. Notification indicating color correction is sent back to client 44 indicating a color corrected image being displayed. When client 44 sends a request to non-mirrored server 36, the requested image is not corrected and no notification of color correction is sent back to client 44. In such case, the title bar of the web page would not indicate a color corrected image.

Client 46 is neither characterized nor includes an application incorporating the present invention for notification. Client interacts with non-mirrored server 36 only and provides no notification icon. When client 46 sends a request to non-mirrored server 36, which is not in mirror communication with hosted color server 32, the requested image sent by non-mirrored server 36 is not color corrected and no notification is provided to the client 46. In such case, the title bar of the web page would not indicate a color corrected image.

Referring now to FIG. 8, a functional block diagram of a server-based notification system 50 for providing critical end user feedback as to the color correction status of imagery on a client display is illustrated. With respect to a server-based notification system, the present invention may be installed on a web site server to notify the user about the state of color correction for digital images output or displayed. In particular, the icon of the present invention can be implemented in an image, tag, program, or watermark embedded within a web page by the web server or any of the links between server and client within the network infrastructure. Server-based notification system 50 is shown with hosted color server 52, mirrored server 54, non-mirrored server 56 and clients 58, 60, 62 and 64. The icon of the present invention is installed in hosted color server 52 and mirrored server 54 and not in non-mirrored server 56.

When client 58 sends a request to hosted 52, client 58 may communicate through some means that it is a client that is of a specific, known calibration. This notification may be included in the HTML stream sent by the browser, or via any other method. In that case, if a color corrected image is sent from hosted color server 52 (or from mirrored server 54) to client 58, then an icon is also sent by mirrored server 54 or by hosted color server 52 to indicate that the image has been corrected. In contrast, when client 58 sends a request to non-mirrored server 56, which is not in communication with hosted color server 52, non-mirrored server 56 does not include an icon (or sends an icon indicating that no color correction has occurred).

In accordance with an alternative embodiment of the invention, client 60 is characterized and includes an applet incorporating the present invention for providing notification. Local client 60 is in direct communication with mirrored server 54 or hosted color server 52, which also includes the notification icon. When client 60 sends a request to mirrored server 54 or hosted color server 52 as described above, the requested image is color corrected and sent back by web site server along with a notification icon indicating a corrected state. Mirrored server 54 also sends the HTML tags indicating color correction and the icon on client is changed to indicate the corrected state. Logic is implemented to arbitrate between the state of the two icons (server-based and client-based). For example, in one embodiment either the server or client based notification icon may take precedence while in another embodiment a third icon, similar to the icons shown in FIGS. 5(a) and (b), may be used to indicate the presence of a different level of color correction based on the presence of both server and client based notifications.

Client 62 is neither characterized nor includes an application incorporating the present invention for notification. When client 62 sends a request to server 54, then either server 52 would use HTML tags to add some watermark or other image to the web page to indicate color accuracy; or server 52 would request web server 54 to send an image which already has an icon superimposed on the image sent by server 54. When client 62 sends a request to non-mirrored server 56, the requested image sent by non-mirrored server 56 is not color corrected and no notification is provided to client 62. In such case, the title bar of the web page would not indicate a color corrected image, and no icon would be sent by non-mirrored server 56.

In accordance with an alternative embodiment of the present invention, depending upon the relationship between the mirrored server 54 and hosted color server 52, hosted color server 52 may require mirrored server 54 to identify images not color corrected. In such case, a server-based icon can be sent to a client to indicate images which are not color corrected.

In accordance with another alternative embodiment of the present invention, multilevel icon certifications may be provided. In particular, multilevel icon certifications can be utilized to distinguish between icon certifications between various entities providing for color correction. For example, when hosted color server 52 provides color correction, an icon identifying not only color correction, but correction specifically provided by a particular hosted color server, is sent to the client. On the other hand, if color correction is provided by another entity, an icon identifying color correction, without identification of a specific entity providing for correction, is sent to the client.

## PARTIAL FILE PROCESSING

To increase the speed of providing color corrected images to a user, commercial server 18 of Fig. 1 may store partially preprocessed data files such as image files or may partially preprocess data files on-the-fly. Similarly, only that portion of a compressed image file necessary to correct the color need be decompressed for color correction thus expediting the process. In general, images available on network 200 may conform to one or more compression standards to permit greater throughput of information and higher inter-connectivity. Several standard image formats such as JPEG (Joint Photographic Experts Group), or MPEG (Motion Picture Experts Group), or GIF (graphical interchange file format) may be found on a network such as the Internet.

Referring now to Fig. 10 process 300 is a conventional technique for image compression such as, for example a JPEG format. Image 302 may be any image such as a line drawing a black and white or color photograph or any other image. Image 302 is compressed by compression device 304 according to a compression standard, here JPEG standards and results in JPEG file 306. A compressed file such as a JPEG file 306 may have several identifiable elements, such as luminance element 308, color element 310, and miscellaneous elements 312 and 314. Miscellaneous elements such as element 312 may include information unnecessary for the ultimate display of a color corrected images over a network, such as a thumbnail image. Other compression standards may have different elements and may function similarly for color spaces using different specification characteristics.

A compressed image file such as image file 316 may be partially uncompressed to expedite color correction as shown in Fig. 10. At step 317, file filter 318 processes image file 316 to separate compressed luminance elements and compressed color elements such as compressed luminance element 316L and compressed color element 316C respectively. Unnecessary file elements such as miscellaneous elements 312 and 314 of Fig. 10 may be discarded to expedite processing. Compressed color element 316C is passed along at step 319, no processing of compressed color element 316C is required according to a currently preferred embodiment of the present invention. However, use of other color spaces or compression techniques may require some processing of a generally unused element such as compressed color element 316C and may result in processed elements such as element 322.

At step 321 one or more file elements needing correction such as luminance element 316L may be decompressed to form correctable elements such as correctable element 320. Following step 321 alternate paths may be used.

In a first embodiment of the present invention at step 325, correctable element 320 and element 322 may be combined using data combiner 324 to form intermediate file 326. Intermediate file 326 has shared elements with compressed image file 316. Correctable elements such as correctable element 320 may be uncompressed awaiting correction and elements not requiring processing such as element 322 may be combined in one or more uncorrected intermediate format files such as uncorrected intermediate file 326. Upon receipt of user color data such as display calibration or characterization data 38 of Fig. 1, uncorrected intermediate file 326 may be processed at step 323 to correct correctable elements such as correctable element 320 according to display calibration or characterization data 38 which may be for a specific user only or it may be a net correction file as discussed below. The result of step 323 may be a corrected intermediate file such as corrected intermediate file 328.

At step 327 corrected elements of corrected intermediate file 328 may be compressed according to the compression technique being used. The resulting file composite corrected image file 332 is a luminance corrected image file according to the compression technique being used.

Referring again to Fig. 1, correction of image file 52F for display may include two or more alternate methods. In a first, display calibration or characterization data 18D of the authoring display 18M may be included with or applied to an image file creating a master corrected image file such as file 237 or uncorrected intermediate file 326 of Fig. 10. Upon receipt of user display calibration or characterization data 238 final correction of image file 237 may be accomplished. Thus file 237 may be displayed on display 206 with corrections included for display 208 and display 206. Alternatively, author display calibration or characterization data 236 may be combined with user display calibration or characterization data 238 to create a net correction file 239 that may be applied to any images authored on display 208 to achieve accurate image display.

In a second embodiment of the present invention at step 325, correctable element 320 may be corrected to form corrected element file 330. As discussed above, upon receipt of user color data such as display calibration or characterization data 38 of Fig. 1, correctable element 320 may be processed at step 323 according to display calibration or characterization data 38 which may be for the user only or it may be a net correction file as discussed.

At step 327 corrected elements such as corrected element file 330 may be compressed according to the compression technique being used. Compressed corrected element file 334 may be combined with element 322 in combiner 336 to form composite corrected image file 338. composite corrected image file 332 and composite corrected image file 338 should yield identical images when displayed on display 22 of Fig. 1.

Starting from an original image file, this technique may also be applied by originally compressing a portion of the image file. The uncompressed portion and the compressed portion and the authoring station color characterization data may then be combined into an intermediate file format to permit fast correction and complete compression for transfer to a user.

## IMAGE PREPROCESSING SETS

In another aspect, the present invention includes a technique for organizing display devices into subsets according to their characteristics and thus limit image correction to a finite number of perceptually uniform subsets. An image presented on display devices within a subset should be indistinguishable to a user on all devices having characteristics within the subset. Analysis of the relationship between gamma, black-point and luminance for display devices such as monitor 353 and monitor 361 demonstrated that within a gamma black-point plane such as coordinate system 364 of Fig. 12, subset areas having limited variance luminance may be described.

Referring now to Fig. 11, in a currently preferred embodiment of the present invention network 350 includes two or more electronic devices such as devices 352, 354, 356, 358, 360 and 362. Electronic devices 352, 354, 356, 358 and 360 further include display elements such as monitor 353, monitor 355, display 357, display 359, monitor 361 and display device 363 respectively. Display elements such as monitor 353, monitor 355, display 357, display 359, monitor 361 and display device 363 may be characterized using two or more parameters such as gamma black-point and luminance for CRT displays. Non-CRT display devices may use different parameters.

Referring now to Fig. 12 coordinate system 364 includes characteristic axes 366 and 368 illustrating the interrelationship between characteristic 370 and 372 respectively. For conventional cathode ray tubes displays such as monitor 353 coordinate system 364 has two characteristic axes 366 and 368 for characteristic 370 (gamma) and 372 (black point) respectively.

One or more subset areas such as subset 374 may be used to identify areas of luminance having nearly-indistinguishable image parameters for CRT display devices such as monitor 361 and display device 363. Subset areas such as subset 374 and subset 376 may overlap. In a currently preferred embodiment of the present invention, subset overlapping is required to completely cover the characteristic space describing the imaging or display device. As characteristic 370 (gamma) and 372 (black point) move away from origin 371, subset areas such as subset 378 may include larger or smaller areas than subset areas closer to origin 371 such as subset 374.

Display device parameters 370 ($\gamma$) and 372 (black point) may be obtained from display device characterization as discussed above. Thus, when a user device 352 requests an image from a correction enabled server 354 , server 354 may display parameters such as characteristic 370 (gamma) and 372 (black point) from user display calibration or characterization data 373 and may provide a pre-corrected image such as pre-corrected image 375 according to which subset the users display device may be grouped in. A server so enabled may store a finite number of pre-corrected images such as pre-corrected images 380 to expedite fulfilling a user request for a corrected image according to the subset of the users display device.

Referring now to Fig. 13, in an alternate embodiment of the present invention, a correction enabled server such as device 354 may use a combination of pre-corrected images in local storage to provide to display devices having subsets in area 386, pre-corrected images in central or network storage for the smaller yet significant number of display devices having subsets in areas 384 and on-the-fly image correction display devices having subsets in areas 382. Other combinations of image correction and storage may be used. Distribution area 386 may also be characterized in terms of one or more parameters of display 353, input or output device, or in terms of some other important and useful characteristic used to subset display devices or images. The distributions need not be limited to a unidimensional characteristic, they may be multidimensional and encompass many display or imaging parameters.

## DETERMINING INPUT/OUTPUT PARAMETERS OF ANY DISPLAY

Referring now to Fig. 14, in another aspect, the present invention includes a method and apparatus to establish the input/output characteristic (I/O) and operating point such as point 392, and to determine I/O curves of displays such as I/O curves 394 and 396 that may be applicable to any type of display technology such as display 357 of Fig. 11. It can be used in conjunction with visual or instrumental characterization or calibration methods. The method described in this invention is not limited to any particular display technology, but it will be described using Liquid Crystal Display (LCD) technology as an example. An application according to the present invention may run

Referring now to Fig.'s 15 and 16, an operating point determination method according to the present invention includes two parts. The first part, data reduction 400, determines the appropriate subset of orthogonal basis vectors that describe the space of measured I/O curves such as I/O curve 394 along with the coefficients used to synthesize the curves. In principle data reduction 400 need only be done once providing the curves used in the analysis span the space of all possible I/O curves. It is this property that makes this a robust general method. In practice, data reduction 400 characterizes a large set of display I/O curves, or vectors, using a smaller set of orthogonal basis vectors. If each I/O curve is represented by N input points, then there is a possibility that the space containing all measurable I/O curves is N-dimensional. Rarely is an I/O characteristic N-dimensional, usually the dimension is something less than N.

The second part of an operating point determination method according to the present invention, data application 402, describes the determination of a specific I/O curve such as I/O curve 394 for a users display such as display 357. There are no constraints, both visual and instrumental approaches are possible.

## Data Reduction

Referring now specifically to Fig. 15 and 17, at step 401 data reduction according to the present invention tests displays such as display 406 and measures screen luminance L, also called screen brightness, as a function of known digital input values DV for neutral or near-neutral colors. Luminance versus digital input value data may also be compiled from existing data such as manufacturers data where available. A plot such as graph 412 of measured luminance L, in candelas/m2, versus DV yields a measured I/O transfer function such as I/O curve 410 of Fig. 18. Screen luminance may be determined using light measuring device 408 which may be a spectroradiometer, colorimeter, or other form of light measuring device. Such measurement could also be done on a relative basis by comparing the displayed luminance relative to some reference, such as a "gray scale" or series of know areas of reflectance. For I/O curves of specific display color primaries, each primary color would be displayed instead of the neutral color. Display color primaries may be red, green and blue for a conventional RGB system, other systems may be used such as CMY, YUV or any other suitable combination.

The number of input DV to be sampled should be sufficient to sample any curvature of the I/O curves such as I/O curve 410. In a currently preferred embodiment of the present invention fifteen uniformly spaced input DV levels have been used, but specific display devices might dictate more or fewer levels. The actual number will depend on the instantaneous slope such as slope S of I/O curve 410. A higher slope such as $S_1$ suggests more samples be used to adequately measure the curve, and, with a lower slope such as $S_2$ few samples may be used.

A sufficient number of different display devices that span the range of I/O characteristics of interest need to be measured or formulated from useful models. The measured data can be one device such as display 406 measured at a multiplicity of display control settings, e.g. brightness and contrast, or many different displays such as monitor 353, monitor 355, display 357, display 359, monitor 361 and display device 363, other combinations are possible.

At step 403 data 414 may be tabulated in a matrix format such as matrix 416 where rows such as row 418 may correspond to each display such as display 406 and/or display setting, and columns such as column 420 may correspond to input data DV. Matrix entries such as entry 422 may be normalized luminance values such as output luminance L. Data matrix 416 may also be "inverted", resulting in columns such as column 420 representing the interpolated luminance values and the matrix entries such as entry 422 are the input digital values. Consistent with the spirit of the invention other normalization techniques may be used. In a currently preferred embodiment of the present invention fifteen input DV values and twenty one different display conditions are used yielding a 21 by 15 matrix.

Step 403 may also include data processing to include normalized display luminance versus normalized DV for each display and/or display setting. Input data DV and output data L may be normalized by dividing by the maximum value in each case. This normalization yields a range of zero to 1.0 for both input and output values.

Matrix 416 must be processed at step 405 before PCA. First, column average 424 of each column 420 of data matrix 416 is determined. The column average is subtracted from each row 418 of data matrix 416. This new matrix is called reduced matrix 426. A covariance matrix 428 is computed by pre-multiplying reduced matrix 426 by its transpose, transpose matrix 427. PCA is then performed on transpose matrix 427. Any suitable conventional software programs may be used to carry out the computations.

At step 407, Principle Component Analysis (PCA) may be performed,(a.k.a. eigenvectors, characteristic vectors) on data matrix 416. The basic idea of PCA is to represent the large collection of measured I/O curves or vectors, by a smaller set of orthogonal basis vectors. A weighted linear combination of these basis vectors are then used to synthesize the complete set of I/O vectors.

In a currently preferred embodiment of the present invention after PCA at step 407, three vectors $v_1$, $v_2$ and $v_3$, plus a mean vector $v_m$, accounted for about 99.88% of the variance in the different I/O curve shapes. This signifies that mean vector $v_m$ plus some weighted linear combination of basis vectors $v_1$, $v_2$ and $v_3$, may be used to synthesize each of the twenty one I/O curves used to generate the data quite accurately. In practice, the number of vectors can be more or less than three, depending on the variety of the measured or model curve shapes (the vector subspace) used in the analysis, and, the precision of the fit required.

Mathematically, I/O curve, Lj, at input, j, may be written as the linear combination of the average vector and the three basis vectors as shown in equation 430.

430

$$L_j = \bar{v}_j + a_1 v_{1,j} + a_2 v_{2,j} + a_3 v_{3,j}$$

In equation 430 $a_1$, $a_2$ and $a_3$ are the vector weights and $v_1$, $v_2$ and $v_3$ are the first three basis, or characteristic, vectors determined from PCA in step 407. Since mean vector $v_m$ and the three basis vectors $v_1$, $v_2$ and $v_3$, are fixed, only three scalar values $a_1$, $a_2$ and $a_3$ are needed to describe the complete I/O curve such as I/O curve 410. This is a significant compaction of the data needed to describe the I/O curve. Without this representation it would take at least fifteen values, in our case, to describe each curve.

At step 409 three coefficients $a_1$, $a_2$ and $a_3$ in equation 430 are determined. Coefficients $a_1$, $a_2$ and $a_3$ are not necessarily related to any specific point on the I/O curve depending on original data matrix 416. If data 414 were input digital values then there may be some simple relationship between coefficients, $a_1$, $a_2$ and $a_3$ and some point on curve 410. For a practical application coefficients $a_1$, $a_2$ and $a_3$ need to be "mapped" or connected to some measurable points on the I/O curve. These points can be determined using visual methods or instrumental methods.

For example, coefficients $a_1$, $a_2$ and $a_3$ may be determined as follows. For each of twenty one I/O curves initially measured or gathered, the DV's yielding 25%, 50% and 75% relative screen luminance may be determined by inverse linear interpolation of each I/O curve. That is three DV's for each component channel such as red, green and blue channels in a conventional RGB system. The other data set is the vector coefficients needed to synthesize the curves. Data set 434 now includes three DVs, $DV_{25}$, $DV_{50}$, and $DV_{75}$, and three vector coefficients $a_1$, $a_2$ and $a_3$, for each I/O curve 410 and the task is to relate DV and coefficients.

In another aspect of the present invention, alternative DV sets may be used to more accurately characterize displays. $DV_{25}$, $DV_{50}$, and $DV_{75}$ may be used for CRT displays and $DV_{33}$, $DV_{50}$, and $DV_{66}$ may be used for LCD displays. Other DV sets may be used successfully.

One technique is using polynomial regression to solve for $b_k$ in equation 432.

$$432 \qquad a_k = (b_1 DV_{25} + b_2 DV_{50} + b_3 DV_{75})^2$$

Other equations may be fitted by either regression or a variety of other curve or function fitting operations. Another possibility is to use some functional form representing a physical model, or, use PCA again. Yet another method might be to linearly or nonlinearly interpolate values, or interpolate $a_k$ from a multidimensional table.

At step 411, data set 434 includes a set of three vectors $v_1$, $v_2$ and $v_3$, plus mean vector $v_m$, and an equation

for each coefficient $a_1$, $a_2$ and $a_3$ that relate the DV's determined from the matching by users or by an instrument, to the coefficients, or weights, needed to synthesize or construct the curve. This needs to be done only once and may be put in a database 436 or stored in any other suitable storage system as shown in Fig. 16.

**I/O Curve Construction**

Once database 436 has been constructed a display I/O curve 410 for each color channel or neutral gray may be created. The I/O curve thus constructed can be written to a file, data set 434, computer memory 438, or otherwise stored for further use in system 440 according to data application method 402 as part of a profile for color management or image management. Image management can comprise any archiving of images or any form of image processing, either spatial or temporal.

Step 413 of data application 402 is to optimize the setup of the display such as display 406. It is possible for users to misadjust the display controls such as brightness control 444 and contrast control 442 so the high luminance levels are on shoulder 446 of I/O curve 410, and many of the low luminance levels are on toe 448 or lower curved part. To optimize operating point 450 of display 406 data for one or more setup screens such as data 452 may be transmitted to user 404 to adjust contrast control 442 and brightness control 444.

Referring now to Fig. 18, a setup screen 454 permits user adjustment of display 406 so there is a differentiation of two or more adjacent, or very close, light (brightness) levels at high and low DV. Setup screen 454 may include an array of patches or areas 456 and 458 either of gray or other display primary colors or color mixtures. Areas 456 and 458 may be closely spaced in the highlights and shadow areas of the I/O curve. The user is instructed to adjust the "brightness" and "contrast", or any other display controls, to assure maximum color or luminance difference between the areas. This will help the user to operate the display off shoulder 446 or toe 448 of I/O curve 410 thereby increasing display dynamic range.

For a conventional LCD display, the "brightness" knob generally controls a fluorescent lamp or other light source behind the LCD and the "contrast" knob generally controls the operating point on the LCD. Therefore, the first adjustment should be the "contrast" to prevent the user from operating the display on the shoulder of the curve. This may be counterintuitive because it apparently causes a decrease in the overall screen brightness. However, many LCD displays have a maximum luminance of about 50% greater than a bright CRT. A "bright" CRT may have a luminance of about 100 cd/$m^2$--the sRGB standard is 80 cd/$m^2$--while many of the better quality LCDs have a luminance value of about 150 cd/$m^2$.

Area 456, at 75%, 66%, or any other suitable scale must not impinge onto shoulder 446, and area 458 at 25%, 33% or any other suitable scale for example, must not impinge into toe 448. Achieving an optimum display setting is not critical.

At step 415 user 404 is queried for inputs in order to determine the values for calculating the basis vector coefficients such as $a_1$, $a_2$ and $a_3$. Any combination of three or more points between 0% and 100% may be suitable.

In another embodiment of the present invention, three points from user visual match data may be used to determine coefficients $a_1$, $a_2$ and $a_3$ as shown for example in Engeldrum & Hilliard USP 5,638,117. Since there are three vectors in the I/O curve synthesis, at least three points are need to estimate the three coefficients. With more or less number of vectors describing the I/O curves, more or less points may be used. There is not necessarily a one-to-one correspondence between the number of vectors and the number of points used. One possibility is to display three, 25%, 50% and 75% halftone screens for each of the display colors, red, green, and blue with a number of continuous tone areas immersed in the halftone background. This method is not limited to the three standard so-called primary colors red, green and blue. In fact it is possible to construct a display using cyan, magenta and yellow that match commercial printing standards in order to get a better match or other color systems may be used. This approach would work just as well with this display or any display that used one or more colorants or primary colors. Also, the number of points and the percentage values can be changed to increase precision, or accuracy of coefficient determination with any given display such as 33%, 50% and 66% or, black, 33%, 50%, 66% and white. The user may select one of the embedded patches such as patch 460 that matches either in color or luminance (brightness) of the surrounding halftone 462. Since the DV for each displayed patch is known, these match values determine the DVs that match the 250, 50% and 75% surround halftone screens. It is also possible to use an instrument to make this comparison. Other arrangements of continuous tone and halftone areas are possible. For example it is possible to keep fixed a continuous tone patch such as patch 460 and make an adjustment of the surrounding halftone such as halftone 462 so there is match between the patch and the halftone.

In still another embodiment of the present invention, a series of patches 464, or images, of known relative DV surrounded by a halftone 462 of known fractional area is presented on a screen 454. An observer is asked to select one of the patches that matches the halftone background. This matching process may then be repeated for two or more other surround halftone values yielding at least three DV- relative luminance pairs. Fractional areas of 25%, 50% and 75% are useful but other values may be better in different situations.

In still another embodiment of the present invention a radiation or light measuring device such as light measuring device 408 may be used and display 406 may be controlled by a computer 466 to present all possible light (color) values in an automatic method. Computer 466 may be programmed to perform a search to find a displayed area 458 that is closest in luminance to a reference luminance, say 75% of the maximum luminance. For popular eight bit systems this does not mean that all 256 levels need to be presented. A binary search method would be very rapid, only requiring the display of patches equal to the number of bits of radiant resolution. For an 8 bit display this would required the display of eight areas, at most, to find the closest input value to the 75% reference value. This process can be repeated for as may values or match points as necessary. Other search methods can be used, for example, some form of table lookup.

At step 417 vector coefficients $a_1$, $a_2$ and $a_3$ may be calculated from regression equation 432, or from a lookup-table or tables, using DVs as independent variables, or possibly the relative luminance obtained by making a halftone-patch match. Other forms of database or data calculations may also be used.

At step 419 equation 430 may be used to calculate the display I/O curve such as I/O curve 410 at each input DV point, j. As in the above example, original data set 414 sampled the input (DV) at fifteen points. This is usually not sufficient for specifying a display profile having an 8 bit input having 256 levels. To compute all 256 or more, points of the I/O curve, several possibilities are available. If the basis vectors such as vectors $v_1$, $v_2$ and $v_3$ are smooth functions of the input DV they can be fit by polynomials or other continuous functional forms. Some form of interpolation is also a method that may successfully be applied. Since the basis vectors are fixed, these need to be interpolated only once and can be stored. In the case of the functional form for the basis vector coefficients equation 430 now becomes equation 468 below:

468

$$L(DV) = \bar{v}(DV) + a_1 f_1(DV) + a_2 f_2(DV) + a_3 f_3(DV)$$

where $f_x$(DV) may be the polynomials representing the basis vectors $v_1$, $v_2$ and $v_3$ and $0 \leq DV \leq 1$. A polynomial representation, or other functional representation of the mean vector may also be used.

Reconstructed I/O curve 470 may "overshoot" and or "undershoot" the actual curve 410. This means that the relative luminance exceeds 1.0, or goes negative. The simple fix is to clip I/O curve 470 to 1.0 the first time it exceeds 1.0, and clip to 0 the first time it goes negative. By checking the 8 bit LUT from the middle of the curve toward the "ends", one can readily determine the first "overshoot" and "undershoot" conditions. Other methods are possible, such as locally altering the transition of the I/O curve at the zero and one points.

In the process of determining a visual match a user may select a patch 472 that generates an unrealistic coefficient $a_u$. There are many ways to deal with this, but a simple way is to ignore basis vectors $v_1$, $v_2$ and $v_3$ and just report mean vector $v_m$. Depending on the basis vectors, the mean vector as a default I/O curve may be adequate for most purposes.

## IMAGE VIEWING ANGLE CALIBRATION / CHARACTERIZATION

In another still further aspect, the present invention provides a method for determining the optimal viewing angle of display, input, or output devices with limited viewing, output and/or sensing angle characteristics. Referring to FIGS. 20 and 21, test pattern 510, including test elements 512 and 514 and background 516, is displayed on display screen 518 which is in communication with computing device 520. For illustrative purposes, display screen 518 is a conventional flat screen display of liquid crystal display (LCD) (analog or digital), electroluminescent or other technology. One skilled in the art will recognize that the present invention is not limited to flat screen monitors, but may be applied to other devices as well, including but not limited to display, input, and output technologies with similar viewing, output and/or sensing angle characteristics. Test elements may be implemented in the form of any convenient indicator, such as patches as illustrated in the figures shown herein.

As is illustrated in detail in FIG. 21, test pattern 510 is displayed on display screen 518 and includes one or more test elements 512 and 514 having levels of gray different from the gray shown in background 516. The test pattern 510 of the present invention may be initiated, i.e., brought to display screen 518, in a number of ways, including clicking on an icon shown on display screen 518. One skilled in the art will recognize that the particular manner test pattern 510 is initiated is not critical to the invention. Once initiated, viewer evaluates test pattern 510 to determine if display screen is 518 positioned at an optical viewing angle to the viewer. One skilled in the art will recognize that the present invention is not limited to the evaluation of gray or luminance differences. Rather, the optimal display angle can be similarly determined by utilizing combinations of colors as test elements and patterns and adjustment can be made according to color changes or color differences between patterns. For illustrative purposes, however, the present invention is described with respect to detecting the difference in the levels of gray between the test elements and background.

In particular, one set of test elements 512 has a luminance just below background 516 and the other set of test elements 514 has a luminance just above background 516. To determine the optimal viewing angle, a viewer evaluates test pattern 510 to determine the difference in gray levels between test elements 512 and 514 against background 516. The viewer then adjusts the position of display screen 518 until test elements 512 and 514 either blend in with background 516 or provides the largest contrast with background 516, as discussed in detail below. Although the present invention is described utilizing test elements 512 and 514 having different levels of gray, one skilled in the art will recognize that the present invention may be implemented with as few as one patch having a luminance different from background 516.

As noted above, in one aspect of the invention, the human visual system is used to detect differences in the color gray between elements 512 and 514 and background 516. Display screen 518 is tilted forwards or backwards relative to the user's viewing location until test elements 512 and 514 blend in or provide the largest contrast with background 516. This blending or contrast is dependent on various factors, including the shape of the tone reproduction curve for the particular display. An exemplary curve for a flat panel display is illustrated in FIG. 22. Where a very low luminance (for instance 8/255 intensity) or a very high luminance (for instance 247/255 intensity) background 516 is utilized, the optimal viewing angle is determined by adjusting display screen 518 until test elements 512 and 514 blend in with the background i.e., have the same luminance as the gray shading in background 516.

Where a medium luminance background 516 is utilized (for instance 128/255 intensity), the optimal viewing angle is determined when lower intensity test elements 512 (for instance 0/155 intensity) and higher intensity test elements 514 (for instance 255/255 intensity) appear to provide the largest contrast against background 516 i.e., have a luminance maximally different from the gray shading in the background 516. The display screen 518 needs to be adjusted to make test elements 512 and 514 most visible. Thus, for an optimal setting, the contrast between test elements 512 and 514 and background 516 is at a maximum. In accordance with the tone reproduction curve 520 shown in FIG. 22, what increases contrast at the mid-tones 522, decreases contrast in the darkest 524 and lightest areas 526.

Instructions on display screen 518 inform the viewer to physically manipulate the viewing angle of the screen, either horizontally, vertically or both, until the background 516 looks uniform. This corresponds to the optimal relative position between user's eyes and flat panel surface. For example, in operation, background 516 is made of an 8/255 gray. Elements are made of either 0/255 gray or 16/255 gray. One skilled in the art will recognize that these values have been chosen to work on all color resolution systems, including but not limited to 8, 15/16 and 24/32 bit systems. Moreover, instead of adjusting the angle of the display screen 518, the viewer could adjust his or her viewing angle while leaving the display screen 518 stationary, use control mechanisms to move with display screen 518, use control mechanisms to adjust properties of the display that affect viewing angle or a combination of any of the above.

Referring to FIG. 23, in accordance with another embodiment of the invention, the present invention may also be implemented using two or more test patterns 530 and 532 simultaneously in different portions of display screen 518. In this configuration, the optimal viewing angle is determined by adjusting display screen 518 until test elements 534 and 536 in each test pattern 530 and 532 blend in or maximally contrasts with its respective background 538 and 540. As noted above, whether the test elements 534 and 536 blend in or contrast with the background 538 and 540 is dependent on the shape of the tone reproduction curve 20 such as that shown in FIG. 22 for the particular display screen 518. For example, as shown in FIG. 23, test pattern 530 includes elements 534 and 536 displayed on low luminance background 538 while test pattern 532, disposed at the opposite end of display screen 518, includes elements 535 and 537 displayed on high luminance background 540. Instructions on display screen 518 inform the viewer to tilt the screen 518, either horizontally, vertically or both, until the display screen 518 looks uniform (i.e. elements 534, 535, 536 and 537 disappear) or until elements 534, 535, 536 and 537 provide maximum contrast against backgrounds 538 and 540.

Referring to FIG. 24, in another embodiment of the invention, test patterns 542 and 544 for determining the optimal viewing angle of a flat display 518 are sequentially displayed in succession. In this configuration, the optimal viewing angle is determined by adjusting display screen 518 until test elements 546 and 548 in each test pattern 542 and 544 blend in or maximally contrasts with its respective background 550 and 552 after each test pattern 542 and 544 is displayed. The test patterns 542 and 544 sequentially displayed may be the same or different patterns. As noted above, whether the test elements 546 and 548 blend in or contrast with the respective background 550 and 552 is dependent upon the shape of the tone reproduction curve 520 as shown in FIG. 22 for the particular display screen 518. Instructions on display screen 518 inform the viewer to tilt the screen 518, either horizontally, vertically or both, until the display screen 518 looks uniform or the elements provide maximum contrast against their respective background 550 and 552.

The present invention may be performed with or without human involvement, and could be performed either locally or via a remote device. Although the preferred embodiment implements the test patterns as a method to adjust the viewing, sensing, and/or display angle of the device, these patterns could be just as easily used as part of a method to pre-process and/or otherwise alter images to be displayed on the device or to alter the display itself so that these images display, capture, and/or print correctly after taking the tilt angle characteristics into consideration. In the case where sensing of luminance and/or contrast of test elements is not limited to the human visual system, software implemented in a processor associated with the display screen can be used to detect the differences between the test elements and background and use such information to pre-process and/or otherwise alter images to be displayed on the device or to alter the display itself so that these images display, capture, and/or print correctly after taking the tilt angle characteristics into consideration.

The present invention may be implemented as a computer program associated with a processor in communication with display screen. Referring to FIG. 25, a flow chart 540 of the computer program for determining the optimal viewing angle of a display screen in accordance with the preferred embodiment of the invention is illustrated. In this particular embodiment, the optimal display angle for viewing the display screen is when the viewer's line of vision is perpendicular to the surface of the display screen, i.e. at a 90 degree angle. In other words, the viewer's line of vision is normal to the surface of the display screen. In such case, the present invention initially generates a test pattern which is displayed on display screen as described earlier (step 542). The test pattern includes at least one indicator and a background, where the appearance of the indicator is different from the appearance of the background. The present invention then displays the test pattern on the display screen for viewing by the user (step 544). The present invention then generates instructions to the user to adjust the display until the indicators and background indicate that the display is at its optimal viewing angle (step 546). As noted above, the optimal viewing angle may be achieved when the appearance of the indicators blend in with the appearance of the background after manipulation of the display. Depending on the particular pattern, the optimal viewing angle may also be achieved when the appearance of the indicator is maximally different from the appearance of the background after manipulation of the display. This manipulation as described above may be accomplished by physical rotation of the screen by the user or other means such as user controls and so forth.

In accordance with an advantage of the present invention, the apparatus and method provides the ability to adjust the viewing, sensing, and/or display angle even where the optimal viewing angle of the display screen is not perpendicular (i.e. normal or at a 90 degree angle) to a viewer's line of vision. For example, where a particular display screen has an optimal viewing of 95 degrees, a user using the present invention can determine the amount of rotation required to adjust the screen such that it is perpendicular (i.e. at a 90 degree angle) to a user's line of vision using the method outlined in the flowchart shown in FIG. 25. The user can then consult manufacturer information regarding the particular display screen to determine the optimal viewing angle for the display and then calculate the difference between the screen's optimal viewing angle and 90 degrees. The user can then adjust the screen from the normal configuration (i.e. perpendicular angle) to the optimal viewing angle. In the above example, the user would adjust the screen an additional 5 degrees from the normal angle (90 degrees) to obtain the optimal viewing angle for the user's particular display (95 degrees). In accordance with another embodiment of the invention, the optimal display angle of known display screens can be preprogrammed in and used by the software to determine the additional degree the display screen needs to be rotated from its normal configuration.

In particular, FIG. 26 is a flow chart 547 of the computer program for determining the optimal viewing angle of a display screen in accordance with the an alternative embodiment of the invention where the optimal viewing angle of the display screen is not 90 degrees. In such case, steps 542, 544 and 546 shown in FIG. 25 are followed initially to rotate the display screen to a 90 angle (i.e. the angle between the user's line of sight and the surface of the display screen is 90 degrees). In step 548, instructions are generated for a user to adjust the display an additional. amount from the 90 degree viewing angle to achieve the optimal viewing angle for the display. The instructions may do this in a number of ways, including instructing the user to consult information regarding the particular optimal viewing angle of the particular display in question. The difference between the optimal viewing angle and the 90 degree viewing angle is the additional amount the displayed must be rotated.

## IMAGE CAPTURE DEVICE CALIBRATION / CHARACTERIZATION

In a still further aspect, the present invention provides a method and a system for determining the color biases of an image capture device, such as a digital camera, or a color scanner, using a color display of known color or spectral characteristics that can be used by an ordinary image capture device user.

In particular, the present invention may eliminate costly and fixed set of test colors by using a flexible color characterized/calibrated or spectral radiance calibrated display device for a color test pattern generation. One particular aspect of the present invention is the color characteristics of the image capture device can be stored in a suitable format for use in a color management system or other device or system that can use or requires calibrated color image data or a characterized and calibrated device, which can be a valuable feature.

This invention describes a method and a system for the color calibration of image capture devices, such as digital cameras, or color scanners, using a color display of known color or spectral characteristics. These color image capture devices may have as few as one channel, usually called black and white or monochrome system, or more than the usual three, "red", "green", and "blue" channels or signal paths. However, any number or choice of colors could be used in this invention.

Referring to FIG. 27, a flow chart 610 of a method for calibrating and characterizing an image capture device via a feedback loop from a known calibrated display is illustrated. The present invention is implemented when a user calibrates/characterizes a display device to generate a calibrated display (step 612) of known colorimetric characteristics. The present invention then displays at least one reference image on the calibrated display generating a calibrated reference image (step 614). The present invention then captures images from the imaging captured device to be calibrated (step 616). The present invention then compares the captured images to each of the calibrated reference images (step 618) and a relationship is computed between the captured images and the calibrated reference images (step 620). The present invention then writes a profile describing the coloimetric characteristics of the device such that the profile can be used by a color management system to calibrate the image capture device (step 622) via a feedback or to correct images captured by the device.

As noted above, in step 612, the present invention calibrates or characterizes a display device to form a calibrated display such that the spectral radiometric or colorimetric properties are known. According to the present invention, the display is typically a variable display device. The display device can be any display device that can display an image. Further, this method is not limited to a display using only three colors, such as "red", "green" or "blue" (RGB) that is typical of most displays. For example, this method can be used with displays containing four or more primary colors, and for monochrome devices. According to another embodiment of the present invention, the display may also use a cathode ray tube, or a liquid crystal display, an emissive panel or any variety of other display devices. According to the preferred embodiment of this invention, a key feature of this display device is that it is not a static reflective sample with color regions of known colorimetric properties, but rather a changeable imaging device of known colorimetric characteristics.

In one embodiment of the present invention, a method of calibration and characterization can be the measurement of the chromaticities of the display primaries and the input/output, or TRC. These are used in conjunction with a model of the display system to calculate the spectral or colorimetric characteristics. Another method according to the present invention, is to display a number of colors with known RGB or other input values and build a multidimensional table relating the digital values driving the display to the display color characteristics.

One skilled in the art will recognize that the display device can be coupled to a Central Processing Unit (CPU) such that any hardware and or software process can be used to perform the necessary calibration needed to calibrate the display device. In accordance with the present invention, a user may use any type of conventional or newly developed color calibration system including, for example, the interactive color calibration method disclosed in U.S. Patent No. 5,638,117, or the self-calibrating display method disclosed in U.S. Patent No. 5,512,961. In the most preferred embodiment according to the present invention, the display device is a computer CRT and is calibrated using the aforementioned calibration methods.

Referring to step 614, the present invention displays at least one reference image on the calibrated display generating a calibrated reference image. Generally, to calibrate the image capture device, a user displays a reference image or series of images on the calibrated display device to create one or more calibrated reference images. These calibrated reference images can be written as a calibrated reference image profile which can be stored in memory and retrieved whenever this particular path is desired by the user, bypassing problems and cost associated with printing a fixed reference color test pattern, the latter which can be subjected to changes and deterioration over a period of time (for example, colors fading due to light exposure, etc.)

Preferably, the reference image or images that are displayed on the calibrated display are RGB and are redundant colors. In a preferred embodiment according to the present invention, a sequence of reference images are displayed, consisting of possible redundant colored areas. The reference images typically are sequentially of red, green, blue, white, and possibly other colors, each completely filling the display area on the display device. According to the present invention, the calibrated reference image is a display of known colorimetric properties and can also be referred to as a color test pattern.

However, image capture devices like cameras, for example, can often contain within them automatic adjustment algorithms or processes which can adjust their image capture for the spectral quality and quantity of the illumination or irradiance on the scene or object. Those skilled in the art will recognize that there are processes to compensate for the correlated color temperature of the illumination, so the output or recorded three digital values representing the "white point" stand in a correct ratio. This white point adjustment process is analogous to the process of chromatic adaptation that is performed by the human visual system as it attempts to keep the appearance of "white objects" white. Also of importance are processes that dynamically or statically adapt, via a setting on the device, to the dynamic or tonal range of the scene or object to be imaged. These processes can include the adjusting the input/output or TRC of the image capture device. According to the present invention, to account for these processes the displayed colors can vary in their absolute luminance or level of spectral radiance to simulate the varying levels of illumination under which the image capture device will be used. The user must either compensate in the display device for the compensation algorithms in the image capture device, or the user must turn off the image compensation mechanisms in the image capture device, for example.

Another consideration in step 614 is the selection of colors or spectral radiances in the reference images, which must be displayed so as to correctly simulate the light source illuminating the scene or object or areas being image captured. As a preferred embodiment for the array of color patterns or test targets, the user would integrate, or average, to the chromaticity, tristimulus value, or correlated color temperature of the simulated light source. According to those skilled in the art, this is similar to the so-called "gray world" assumption that is used as the basis of color balancing color photographic prints and "white point" balancing video cameras. According to the present invention, other criteria for establishing the overall properties of a set of test patterns (of the reference images) to be displayed on the calibrated display device are possible and these would be guided by the overall objectives, goal, or usage of the color capture device.

A preferred embodiment according to the present invention, in the consideration in the selection of reference images (color test patterns) is to select the number and locations of colors, in color space, so there are a sufficient number in regions of the capture device color space where there is large curvature of a high degree of nonlinearity. Often the calibration or characterization data from the image capture device is used to build a multidimensional table for determining color values of the device. For example, if the color capture device has a high degree of nonlinearity more data or table points are needed for accurate conversion and therefore the spacing of the test target colors can be very critical.

Yet another area is the spatial arrangement of color on the display. Both displays and image capture devices have variation in their output and sensitivity, respectively. To minimize this variation both the spatial location of the test pattern on the display and the spatial location of the test pattern imaged on the image capture device should be varied. Appropriate averaging of the recorded and stored data can be used to reduce these spatial nonuniform effects.

According to the present invention, other considerations in displaying reference images, are ease of use, such as displaying test areas that are large enough to be easily captured by an imaging capture device, without requiring the user to precisely adjust the image area captured to the image area displayed on the display device. For example, when an end user to capture a snapshot of a full screen of red, green, and blue sequentially since there is often no requirement for precise alignment if full screens of color are displayed.

Referring to the next portion of step 614, is to generate a calibrated reference image, or series of images, of the reference image (color test pattern), displayed on the calibrated display. The reference image may be a single image, or a plurality of images shown sequentially in fixed or random order, which are captured by the image capture device in one or more capture steps.

According to the present invention, the calibrated display may be a distinct device from the image capture device, or for example, as in the case with many digital cameras, it may be a display built into the image capture device itself. In the latter case, the calibrated display would be folded over, or moved, or adjusted so that the camera can capture an image of its own display. In other words, the user would just snap pictures of each of the reference images in random or specific sequence. This step may also involve the use of a color or other optical filter placed over the face of the calibrated display or over the "lens" of the image capture device.

Referring to step 616, the present invention then captures images from the imaging captured device to be calibrated. In other words, capture the calibrated reference image displayed as described in above instep 614 on the image capture devices' light sensitive elements. For an image capture device such as a camera, the device can be positioned or pointed at the display and an image of the color test patterns, within the test target, or including the test target and a known or unknown surround, and such reference patterns are imaged on the image capture surface of the device. Another possible method for a flat bed scanner would be to place, for example, an LCD or any other so-called flat panel display device, on the scanner plate or bed and "scan" the image on the calibrated display. The captured digital image data from each of the color areas of the test pattern can be stored in a device, for example, such as a computer for later use.

Referring now to step 618, compare the captured images to each of the calibrated reference images. Data from the captured images are compared to data from the calibrated reference images for colors that the user desires.

As noted in step 620, a relationship is computed between the colorimetry of the captured images and the colorimetry of the calibrated reference images to generate a data file that describes the colorimetry of said image capture device. In other words, a relationship is made between the captured images red, green and blue digital values with the known colors displayed on the calibrated reference images and a correction profile for the image capture device is generated. This relationship is not limited to the red, green and blue channel or digital values. It can be more than three colors or "channels," including a full description of the spectral properties such as radiance, reflectance, or irradiance.

Referring to step 622, a profile describing the colorimetric characteristics of the device is written such that the profile (a data file or other form of description describing the relationship) can calibrate the image capture device via a feedback mechanism. Preferably, the profile is written describing differences in images captured attributable to the characteristics of the image capture device.

Typically, this means that the final step is to take from the correction image, the stored digital data for each color area and use it to create a characterization or calibration profile for later use. For example, a user may use any type of conventional or newly developed characterization or calibration profile method including, for example, the characterization or calibration profile disclosed in U.S. Patent No. 5,561,459. In the most preferred embodiment according to the present invention, the profile of the image capture device from step 22, is stored in the International Color Consortium (ICC) specification, although any format that meets the conditions according to the present invention, may be used. ICC profiles are device profiles that can be used to translate color data created on one device into a native color space of another device. These ICC profiles for the device characteristics may be embedded in an image file or stored in a memory in a connected personal computer. For example, the ICC profiles could be stored in a memory accessible by a CPU . In an attempt to identify color corrected images, conventional images are color tagged with information, often in an International Color Consortium ("ICC") color profile format, before posting on a compact disc, web site, or other repository for later viewing, as is well known in the industry and defined by the ICC Profile Format Specification, ICC 1:1998-09 and addenda, the contents of which are hereby incorporated by reference (latest version available at http://www.color.org). Further, the calibration or characterization profile can be in the form of a multidimensional look-up table (LUT) or perhaps a more simplified data that assumes some imaging model for the image capture device.

Once the initial calibration has occurred, a user can recalibrate the image capture device which can be easily implemented by regenerating the profile and comparing it to the calibrated reference images which were originally calculated and stored in the calibration memory.

Referring now to FIG. 28, a functional block diagram of a calibration system 640 for image capturing devices is illustrated. Calibration system 640 is shown with image capture device 642, display device 644 and a transmit path 646.

In operation, an end user uses the display device 644 to calibrate an image capture device 642. The display device 644 is typically a variable display device that can display an image. In a preferred embodiment, the display device can be calibrated/characterized to display colors with known colorimetric properties (CIE trisimulus values). This calibration/characterization is preferably in the form of a profile. The standard format for the profile is the ICC. The profile preferably is colorimetric.

The display device 644 can be coupled to a Central Processing Unit (CPU), and can contain a memory. Peripheral devices of display device 644 includes terminals, data storage devices, printers. The display device 644 can be coupled to a conventional computer system which includes hardware and/or software components. According to the present invention, the computer can control the display device to generate a colorimetrically calibrated/characterized display, by using various software application programs which can operate to calibrate the display device. These software application programs are well known in the art and are described above. At least one reference image can be displayed on the calibrated display generating a calibrated reference image with known colorimetric properties.

According to the present invention, the system includes a transmit path 646 between image capture device 642 and display device 644. The transmit path 646 can also function as a feedback loop which, according to the present invention, can be used as a link to transfer images between the display device 644 and image capture device 642 resulting in a calibrated image capture device 642.

The image capture device 642 can be any image capture device that can be calibrated and known to those skilled in the art including scanners, monitors, printers, televisions or digital cameras. The image capture device 642 typically captures images and via the transmit path 646, transfers the captured images to the displayed device 644. The captured images and the known colorimetric properties of the calibrated reference images are compared and a relationship between the captured images and the calibrated images is computed. Next a profile is written describing colorimetric characteristics of the image capture device according to the relationship, which can be transmitted via the transmit path 646, from the now calibrated display device 644 to calibrate the image capture device 642.

The present invention includes a number of features and advantages. First, the present invention provides a simple method and system for calibrating and characterizing an image capture device using a calibrated display of known colorimetric properties. The calibration features of the present invention require little user intervention. Further, distortions introduced by elements typically seen in calibration methods are reduced. For example, distortions introduced by having a fixed calibrated image that can fade or distort colors over time due to exposure to light or wear and tear, are eliminated by using the flexible colorimetric system according to the present invention. Further, many of the distortions that depend on fixed calibrations are often time-varying and are often unable to compensate for drift over time. The present invention permits the user to compensate for these time-varying problems. Still further, typically an application will print a saved image in one file format differently from the same image in a different file format. The present invention keeps track of the file format that was used for the calibration images by encoding them in a suitable profile format that are created from those calibration images.

Having now described the invention in accordance with the requirements of the patent statutes, those skilled in this art will understand how to make changes and modifications in the present invention to meet their specific requirements or conditions. Such changes and modifications may be made without departing from the scope of the invention as set forth in the following claims.

## Claims

1. A method of providing images from an image server to a user in accordance with characteristics of a users display monitor, **characterised in that**:

   a request server determines if a set of colour display characteristics for use with the user's display monitor, determined from the user's interaction with images previously displayed on the display monitor, is available; and if the set of display monitor colour display characteristics is available, the image server sends to the user's display one or more images having colour modified in accordance with the set of display monitor colour display characteristics.

2. The method of claim 1, further **characterised in that**:

   if the display monitor colour display characteristics are not available, the image server sends unmodified images.

3. The method of claim 1 or 2, further **characterised by**:

   providing an indication with each image sent to the user if the image has been modified in accordance with the display monitor colour display characteristics.

4. The method of claim 3, wherein providing an indication to the user is further **characterised by**:

   displaying a first icon to the user if the image has been modified in accordance with the display monitor colour display characteristics.

5. The method of claim 4, wherein providing an indication to the user is further **characterised by**:

   displaying a second icon to the user if the image has not been modified in accordance with the display monitor colour display characteristics.

6. The method of claim 1, wherein the one or more images modified in accordance with the set of display monitor colour display characteristics are further **characterised in that**:

   the image server modifies the one or more images in response to a request for images from the user, prior to sending the modified images.

7. The method of claim 1, further **characterised in that**:

   the image server selects the one or more modified images from one or more groups of pre-modified images, prior to sending the one or more modified images.

8. The method of claim 3, wherein providing an indication to the user is further **characterised by**:

   providing an icon, a second image, a non-standard cursor, or a watermark embedded in the selected image as the indication to the user.

9. The method of claim 1 or 2, further **characterised in that**:

   the request server detects mark-up language tags, ICC profiles, pointers to mark-up language tags, or pointers to ICC profiles to determine if the set of display monitor colour display characteristics is available.

**10.** The method of claim 1 or 2, further **characterised in that**:

the request server checks file entries, registries, pointers to file entries, or pointers to registries to determine if the set of display monitor colour display characteristics is available.

**11.** The method of claim 1, further **characterised in that**:

the request server receives a request for the one or more images from a user client over a computer network, the user client being operably connected to the user display monitor;
in response to the request, the request server determines if the set of display monitor colour display characteristics is available by determining if a first cookie is available from the client to the image server, the first cookie being related to the set of display monitor colour display characteristics; and
if the first cookie is not available from the client to the image server, the image server sends the one or more images modified in accordance with an alternative set of display monitor colour display characteristics.

**12.** The method of claim 11, further **characterised in that**:

the alternative set of display monitor colour display characteristics is related to the set of users display monitor colour display characteristics.

**13.** The method of claim 11, further **characterised in that**:

the computer network is an Internet, an intranet, or a local area network.

**14.** The method of claim 11, wherein sending the one or more images modified in accordance with the alternative set of display monitor colour display characteristics is further **characterised by**:

providing a request for the alternative set of display monitor colour display characteristics to a third server.

**15.** The method of claim 14, wherein providing the request to the third server is further **characterised by**:

redirecting the client over the network from the image server to the third server.

**16.** The method of claim 15, wherein redirecting the client is further **characterised by**:

providing the first cookie from the client to the third server to enable the third server to identify the client.

**17.** The method of claim 15, wherein redirecting the client is further **characterised by**:

providing a second cookie from the client to the third server to enable the third server to identify the client, the second cookie having been previously dropped by the third server on the client.

**18.** The method of claim 17, further **characterised by**:

bouncing the client over the network from the third server to the image server to provide the alternative set of colour display information from the third server to the image server.

**19.** The method of claim 18, further **characterised by**:

dropping the third cookie from the image server on the client to make the alternative set of colour display information available to the image server, the third cookie being in the domain of the image server.

**20.** The method of claim 1, wherein the user's interaction with images previously displayed on the display monitor are further **characterised by**:

transferring test images and requests for response over a computer network to a user client for display to the user on the display monitor, the user client being operably connected to the user display monitor; and
processing the user's responses to determine the display monitor colour display characteristics.

**21.** The method of claim 20, wherein transferring test images and requests for response for display on the display monitor is further **characterised by**:

selecting the test images and requests for response based on parameters including desired level of thoroughness of characterisation, known hardware characteristics of the display monitor, known software characteristics of the display monitor, known characteristics of the network connection to the display monitor, or characteristics of the test images transferred to the display monitor.

**22.** The method of claim 21, wherein transferring test images and requests for response for display on the display monitor is further **characterised by**:

selecting the test images and requests for response based on the information indicative of test images or test patterns selected by the user.

**23.** The method of claim 22, wherein selecting the test images and requests for response based on the information indicative of test images or test patterns selected by the user is further **characterised by**:

selecting the order in which the test images and requests for response are transferred for display on the display monitor.

**24.** The method of claim 22, further **characterised in that**:

transferring test image and request for response over the network for display on the display monitor to the user is performed upon a request for initiation of colour display characterisation.

**25.** The method of claim 20, wherein processing the user's responses to determine the display monitor colour display characteristics is further **characterised by**:

creating a display monitor characterisation file comprising the set of display monitor colour display characteristics.

**26.** The method of claim 25, further **characterised by**:

providing the characterisation file to the user client.

**27.** The method of claim 25, further **characterised by**:

providing the characterisation file to the image server.

**Patentansprüche**

**1.** Ein Verfahren zum Bereitstellen von Bildern aus einem Bild-Server an einen Benutzer in Übereinstimmung mit Charakteristika eines Anzeigemonitors des Benutzers, **dadurch gekennzeichnet,**
**daß** ein Anforderungs-Server bestimmt, ob ein Satz von Farbanzeigecharakteristika zur Verwendung bei dem Anzeigemonitor des Benutzers, der aus einer Interaktion des Benutzers mit zuvor auf dem Anzeigemonitor angezeigten Bildern bestimmt worden ist, verfügbar ist; und
**daß** dann, wenn der Satz von Anzeigemonitor-Farbanzeigecharakteristika verfügbar ist, der Bild-Server an die Anzeige des Benutzers eines oder mehrere Bilder sendet, die eine in Übereinstimmung mit dem Satz von Anzeigemonitor-Farbanzeigecharakteristika modifizierte Farbe aufweisen.

**2.** Das Verfahren nach Anspruch 1, ferner **dadurch gekennzeichnet,**
**daß** dann, wenn die Anzeigemonitor-Farbanzeigecharakteristika nicht verfügbar sind, der Bild-Server nichtmodifizierte Bilder sendet.

**3.** Das Verfahren nach Anspruch 1 oder 2, ferner **dadurch gekennzeichnet,**
**daß** mit jedem an den Benutzer gesendeten Bild eine Anzeige zur Verfügung gestellt wird, ob das Bild in Übereinstimmung mit den Anzeigemonitor-Farbanzeigecharakteristika modifiziert worden ist.

4. Das Verfahren nach Anspruch 3, wobei das Bereitstellen einer Anzeige an den Benutzer ferner **dadurch gekennzeichnet ist,**
   **daß** ein erstes Icon dem Benutzer angezeigt wird, sofern das Bild in Übereinstimmung mit den Anzeigemonitor-Farbanzeigecharakteristika modifiziert worden ist.

5. Das Verfahren nach Anspruch 4, wobei das Bereitstellen einer Anzeige an den Benutzer ferner **dadurch gekennzeichnet ist,**
   **daß** ein zweites Icon dem Benutzer angezeigt wird, sofern das Bild nicht in Übereinstimmung mit dem Anzeigemonitor-Farbanzeigecharakteristika modifiziert worden ist.

6. Das Verfahren nach Anspruch 1, wobei das Modifizieren des einen oder der mehreren Bilder in Übereinstimmung mit dem Satz der Anzeigemonitor-Farbanzeigecharakteristika ferner **dadurch gekennzeichnet ist,**
   **daß** der Bild-Server das eine oder die mehreren Bilder in Abhängigkeit von einer Anforderung der Bilder von einem Benutzer vor dem Senden der modifizierten Bilder modifiziert.

7. Das Verfahren nach Anspruch 1, ferner **dadurch gekennzeichnet,**
   **daß** der Bild-Server das eine oder die mehreren modifizierten Bilder aus einer oder aus mehreren Gruppen vor-modifizierter Bilder vor dem Senden des einen oder der mehreren modifizierten Bilder auswählt.

8. Das Verfahren nach Anspruch 3, wobei das Bereitstellen einer Anzeige an den Benutzer ferner **dadurch gekennzeichnet ist,**
   **daß** ein Icon, ein zweites Bild, ein Nicht-Standard-Cursor oder ein in dem ausgewählten Bild eingebettetes Wasserzeichen als Anzeige an den Benutzer zur Verfügung gestellt wird.

9. Das Verfahren nach Anspruch 1 oder 2, ferner **dadurch gekennzeichnet,**
   **daß** der Anforderungs-Server Auszeichnungssprach-Tags, ICC-Profile, Zeiger auf Auszeichnungssprach-Tags oder Zeiger auf ICC-Profile erfaßt, um zu bestimmen, ob der Satz von Anzeigemonitor-Farbanzeigecharakteristika verfügbar ist.

10. Das Verfahren nach Anspruch 1 oder 2, ferner **dadurch gekennzeichnet,**
    **daß** der Anforderungs-Server Dateieinträge, Registraturen, Zeiger auf Dateieinträge oder Zeiger auf Registraturen überprüft, um zu bestimmen, ob der Satz von Anzeigemonitor-Farbanzeigecharakteristika zur Verfügung steht.

11. Das Verfahren nach Anspruch 1, ferner **dadurch gekennzeichnet,**
    **daß** der Anforderungs-Server eine Anforderung eines oder mehrerer Bildern aus einem Benutzer-Client über ein Computernetzwerk empfängt, wobei der Benutzer-Client betriebsfähig mit dem Benutzeranzeigemonitor verbunden ist;
    **daß** in Erwiderung der Anforderung der Anforderungs-Server bestimmt, ob der Satz von Anzeigemonitor-Farbanzeigecharakteristika verfügbar ist, indem er bestimmt, ob ein erster Cookie aus dem Client für den Bild-Server verfügbar ist, wobei der erste Cookie sich auf den Satz von Anzeigemonitor-Farbanzeigecharakteristika bezieht; und
    **daß** dann, wenn der erste Cookie aus dem Client für den Bild-Server nicht zur Verfügung steht, der Bild-Server das eine oder die mehreren Bilder in Übereinstimmung mit einem alternativen Satz von Anzeigemonitor-Farbanzeigecharakteristika modifiziert sendet.

12. Das Verfahren nach Anspruch 11, ferner **dadurch gekennzeichnet,**
    **daß** der alternative Satz von Anzeigemonitor-Farbanzeigecharakteristika sich auf den Satz von Anzeigemonitor-Farbanzeigecharakteristika des Benutzers bezieht.

13. Das Verfahren nach Anspruch 11, ferner **dadurch gekennzeichnet,**
    **daß** das Computernetzwerk ein Internet, ein Intranet oder ein lokales Netzwerk ist.

14. Das Verfahren nach Anspruch 11, wobei das Senden des einen oder der mehreren Bilder, die in Übereinstimmung mit dem alternativen Satz von Anzeigemonitor-Farbanzeigecharakteristika modifiziert sind, ferner **dadurch gekennzeichnet ist,**
    **daß** eine Anforderung des alternativen Satzes von Anzeigemonitor-Farbanzeigecharakteristika einem dritten Server bereitgestellt wird.

**15.** Das Verfahren nach Anspruch 14, wobei das Bereitstellen der Anforderung an einen dritten Server ferner **dadurch gekennzeichnet ist,**
**daß** der Client über das Netzwerk von dem Bild-Server an den dritten Server umgelenkt wird.

**16.** Das Verfahren nach Anspruch 15, wobei das Umlenken des Client ferner **dadurch gekennzeichnet ist,**
**daß** der erste Cookie aus dem Client an den dritten Server zur Verfügung gestellt wird, um es dem dritten Server zu ermöglichen, den Client zu identifizieren.

**17.** Das Verfahren nach Anspruch 15, wobei das Umlenken des Client ferner **dadurch gekennzeichnet ist,**
**daß** ein zweiter Cookie aus dem Client dem dritten Server zur Verfügung gestellt wird, um es dem dritten Server zu ermöglichen, den Client zu identifizieren, wobei der zweite Cookie zuvor von dem dritten Server auf dem Client abgeworfen wurde.

**18.** Das Verfahren nach Anspruch 17, ferner **dadurch gekennzeichnet,**
**daß** der Client über das Netzwerk auf dem dritten Server zu dem Bild-Server verwiesen wurde, um den alternativen Satz der Farbanzeigeinformationen aus dem dritten Server zu dem Bild-Server zur Verfügung zu stellen.

**19.** Das Verfahren nach Anspruch 18, ferner **dadurch gekennzeichnet,**
**daß** der dritte Cookie aus dem Bild-Server auf dem Client abgeworfen wird, um den alternativen Satz der Farbanzeigeinformationen für den Bild-Server verfügbar zu machen, wobei der dritte Cookie sich in der Domäne des Bild-Servers befindet.

**20.** Das Verfahren nach Anspruch 1, wobei die Interaktion des Benutzers mit zuvor auf dem Anzeigemonitor angezeigten Bildern ferner **dadurch gekennzeichnet ist,**
**daß** Testbilder und Antwort-Anforderungen über ein Computernetzwerk an einen Benutzer-Client zur Anzeige an den Benutzer auf dem Anzeigemonitor übertragen werden, wobei der Benutzer-Client betriebsfähig mit dem Benutzer-Anzeigemonitor verbunden ist; und
**daß** die Antworten des Benutzers verarbeitet werden, um die Anzeigemonitor-Farbanzeigecharakteristika zu bestimmen.

**21.** Das Verfahren nach Anspruch 20, wobei das Übertragen der Testbilder und Antwort-Anforderungen zur Anzeige auf dem Anzeigemonitor ferner **dadurch gekennzeichnet ist,**
**daß** die Testbilder und Antwort-Anforderungen auf der Grundlage von Parametern ausgewählt werden, die den gewünschten Grad der Genauigkeit der Charakterisierung, bekannte Hardware-Charakteristika des Anzeigemonitors, bekannte Software-Charakteristika des Anzeigemonitors, bekannte Charakteristika der Netzwerkverbindung zu dem Anzeigemonitor oder Charakteristika der zu dem Anzeigemonitor übertragenen Testbilder einschließen.

**22.** Das Verfahren nach Anspruch 21, wobei das Übertragen der Testbilder und Antwort-Anforderungen zur Anzeige auf dem Anzeigemonitor ferner **dadurch gekennzeichnet ist,**
**daß** die Testbilder und Antwort-Anforderungen auf der Grundlage der für die von dem Benutzer ausgewählten Testbilder oder Testmuster kennzeichnenden Informationen ausgewählt werden.

**23.** Das Verfahren nach Anspruch 22, wobei das Auswählen der Testbilder und Antwort-Anforderungen auf der Grundlage der für die von dem Benutzer ausgewählten Testbilder oder Testmuster kennzeichnenden Informationen ferner **dadurch gekennzeichnet ist,**
**daß** die Reihenfolge, in welcher die Testbilder und Antwort-Anforderungen zur Anzeige auf dem Anzeigemonitor übertragen werden, ausgewählt werden.

**24.** Das Verfahren nach Anspruch 22, ferner **dadurch gekennzeichnet,**
**daß** das Übertragen eines Testbilds und einer Antwort-Anforderung über das Netzwerk zur Anzeige auf dem Anzeigemonitor an den Benutzer bei einer Anforderung einer Initiierung der Farbanzeigecharakterisierung ausgeführt wird.

**25.** Das Verfahren nach Anspruch 20, wobei das Verarbeiten der Antworten des Benutzers zum Bestimmen der Anzeigemonitor-Farbanzeigecharakteristika ferner **dadurch gekennzeichnet ist,**
**daß** eine Anzeigemonitorcharakterisierungsdatei erzeugt wird, die den Satz der Anzeigemonitor-Farbanzeigecharakteristika aufweist.

**26.** Das Verfahren nach Anspruch 25, ferner **dadurch gekennzeichnet,** **daß** die Charakterisierungsdatei dem Benutzer-Client zur Verfügung gestellt wird.

**27.** Das Verfahren nach Anspruch 25, ferner **dadurch gekennzeichnet,** **daß** die Charakterisierungsdatei dem Bild-Server zur Verfügung gestellt wird.

## Revendications

**1.** Un procédé de fourniture d'images à un utilisateur à partir d'un serveur d'images en fonction des caractéristiques d'un écran d'affichage de l'utilisateur, **caractérisé en ce que** :

- un serveur de requêtes détermine si un jeu de caractéristiques d'affichage de couleurs pour utilisation avec l'écran d'affichage de l'utilisateur, déterminé à partir des interactions de l'utilisateur avec des images affichées précédemment sur l'écran d'affichage, est disponible et :

- dans le cas où le jeu de caractéristiques d'affichage de couleurs pour l'écran d'affichage est disponible, le serveur d'images envoie à l'écran de l'utilisateur une ou plusieurs images dont la couleur est modifiée en correspondance avec le jeu des caractéristiques d'affichage de couleurs de l'écran d'affichage.

**2.** Le procédé selon la revendication 1, **caractérisé en outre en ce que** :

dans le cas où les caractéristiques d'affichage de couleurs de l'écran d'affichage ne sont pas disponibles, le serveur d'images envoie des images non modifiées.

**3.** Le procédé selon la revendication 1 ou 2, **caractérisé en outre, par** :

la fourniture d'une indication avec chaque image envoyée à l'utilisateur dans le cas de modification d'une image en correspondance avec les caractéristiques d'affichage de couleurs de l'écran d'affichage.

**4.** Le procédé selon la revendication 3, dans lequel la fourniture d'une indication à l'utilisateur est en outre **caractérisée par** :

- l'affichage d'un premier icone à l'utilisateur dans le cas où l'image a été modifiée en correspondance avec les caractéristiques d'affichage de couleurs de l'écran d'affichage.

**5.** Le procédé selon la revendication 4, dans lequel la fourniture d'une indication à l'utilisateur est en outre **caractérisé par** :

- l'affichage d'un deuxième icone à l'utilisateur dans le cas où l'image n'a pas été modifiée en correspondance avec les caractéristiques d'affichage de couleurs de l'écran d'affichage.

**6.** Le procédé selon la revendication 1, dans lequel l'une ou plusieurs images modifiée(s) en correspondance avec le jeu des caractéristiques d'affichage de couleurs de l'écran d'affichage sont en outre **caractérisées en ce que** :

- le serveur d'images modifie l'une ou plusieurs images en réponse à une requête d'images émise par l'utilisateur, avant l'envoi des images modifiées.

**7.** Le procédé selon la revendication 1, **caractérisé en outre en ce que** :

le serveur d'images choisit l'une ou plusieurs images modifiées à partir d'un ou plusieurs groupes d'images pré-modifiées, avant l'envoi de l'une ou plusieurs images modifiées.

**8.** Le procédé selon la revendication 3, dans lequel la fourniture dune indication à l'utilisateur est en outre **caractérisé par** :

- la fourniture d'un icone, d'une deuxième image, d'un curseur non standard, ou un filigrane noyé dans l'image choisie, en tant qu'indication à l'utilisateur.

**9.** Le procédé selon la revendication 1 ou 2, **caractérisé en outre en ce que** :

- le serveur de requête détecte des balises de langage de balisage, des profils ICC, des pointeurs vers des balises d'un langage de balisage, ou des pointeurs vers des profils ICC afin de déterminer si le jeu de caractéristiques d'affichage de couleur de l'écran d'affichage est disponible.

**10.** Le procédé selon la revendication 1 ou 2, **caractérisé en outre en ce que** :

- le serveur de requête vérifie des entrées de fichiers, des registres, les pointeurs vers des entrées d'un fichier ou des pointeurs vers des bases de registres pour déterminer si le jeu des caractéristiques d'affichage de couleurs de l'écran d'affichage est disponible.

**11.** Le procédé selon la revendication 1, **caractérisé en outre en ce que** :

- le serveur de requête reçoit une requête demandant une ou plusieurs images à partir d'un client utilisateur sur un réseau informatique, le client utilisateur étant connecté de façon fonctionnelle à l'écran d'affichage de l'utilisateur;
- en réponse à la requête, le serveur de requête détermine si le jeu de caractéristiques d'affichage de couleurs de l'écran d'affichage est disponible en déterminant si affiche un premier fichier de profil (cookie) est disponible pour le serveur d'images à partir du client, le premier fichier de profil étant associé au jeu de caractéristiques d'affichage de couleurs de l'écran d'affichage ; et

dans le cas où le premier fichier de profil n'est pas disponible au serveur d'images à partir du client, l'envoie par le serveur d'images d'une ou plusieurs images modifiées en correspondance à un autre jeu alternatif de caractéristiques d'affichage de couleurs de l'écran d'affichage.

**12.** Le procédé selon la revendication 11, **caractérisé en outre en ce que** :

l'autre jeu alternatif de caractéristiques d'affichage de couleurs de l'écran d'affichage est associé au jeu de caractéristiques d'affichage de couleurs de l'écran d'affichage de l'utilisateur.

**13.** Le procédé selon la revendication 11, **caractérisé en ce que** :

le réseau informatique est l'internet, un intranet ou un réseau local.

**14.** Le procédé selon la revendication 11, dans lequel l'envoi d'une ou plusieurs images modifiées en correspondance à l'autre jeu alternatif de caractéristiques d'affichage de couleurs de l'écran d'affichage est en outre **caractérisé par** :

- l'émission d'une requête pour l'autre jeu alternatif des caractéristiques d'affichage de couleurs de l'écran d'affichage vers un troisième serveur.

**15.** Le procédé selon la revendication 14, dans lequel l'émission de la requête vers le troisième serveur est en outre **caractérisé en ce que** :

- le re-aiguillage du client sur le réseau, à partir du serveur d'images vers le troisième serveur.

**16.** Le procédé selon la revendication 15, dans lequel le re-aiguillage du client est en outre **caractérisée par** :

- la fourniture du premier fichier de profil (cookie)
- à partir du client au troisième serveur, pour permettre au troisième serveur d'identifier le client

**17.** Le procédé selon la revendication 15, dans lequel le ré-aiguillage du client est en outre **caractérisé par** :

- la fourniture d'un deuxième fichier de profil (cookie) à partir du client au troisième serveur pour permettre au troisième serveur d'identifier le client, le deuxième fichier de profil ayant été déposé précédemment par le troisième serveur sur le client.

18. Le procédé selon la revendication 17, **caractérisé en outre, par** le rebondissement du client sur le réseau, à partir du troisième serveur vers le serveur d'images pour fournir l'autre jeu altematif d'informations d'affichage de couleurs à partir du troisième serveur vers le serveur d'images.

19. Le procédé selon la revendication 18, **caractérisé en outre par** :

le dépôt du troisième fichier de profil à partir du serveur d'images sur le client, afin de rendre disponible au serveur d'images le jeu alternatif d'informations d'affichage de couleurs, le troisième fichier de profil étant dans le domaine du serveur d'images.

20. Le procédé selon la revendication 1, dans lequel l'interaction de l'utilisateur avec les images affichées précédemment sur l'écran d'affichage est en outre **caractérisé par** :

- le transfert d'images d'essai et de requêtes sollicitant une réponse sur un réseau informatique à un client utilisateur pour affichage à l'utilisateur sur l'écran d'affichage, le client utilisateur étant relayé de façon fonctionnelle à l'écran d'affichage de l'utilisateur; et
- le traitement des réponses de l'utilisateur pour déterminer les caractéristiques d'affichage de couleurs de l'écran d'affichage.

21. Le procédé selon la revendication 20, dans lequel le transfert des images d'essai et des requêtes demandant une réponse pour affichage sur l'écran d'affichage est en outre **caractérisé par** :

- un choix des images d'essai et des requêtes demandant une réponse sur la base de paramètres qui comprennent le niveau recherché d'exactitude de caractérisation, des caractéristiques matérielles connues de l'écran d'affichage, des caractéristiques logicielles connues de l'écran d'affichage, des caractéristiques connues de la connection réseau avec l'écran d'affichage ou des caractéristiques des images d'essai transférées à l'écran d'affichage.

22. Le procédé selon la revendication 21, dans lequel le transfert des images d'essai et des requêtes demandant une réponse pour affichage sur l'écran d'affichage est en outre **caractérisé par** :

- un choix des images d'essai et des requêtes demandant une réponse sur la base d'informations indiquant les images d'essai ou des modèles d'essai choisies par l'utilisateur.

23. Le procédé selon la revendication 22, dans lequel le choix des images d'essai et des requêtes demandant une réponse sur la base de l'information indiquant le choix des images d'essai ou des modèles d'essai, effectué par l'utilisateur est en outre **caractérisé par** :

- un choix de l'ordre de transfert des images d'essai et des requêtes demandant une réponse pour affichage sur l'écran d'affichage.

24. Le procédé selon la revendication 22, **caractérisé en outre en ce que** :

- le transfert des images d'essai et les requêtes demandant une réponse sur le réseau pour affichage sur l'écran d'affichage pour l'utilisateur est effectué suite à une demande de lancement de caractérisation de l'affichage de couleurs.

25. Le procédé selon la revendication 20, dans lequel le traitement des réponses de l'utilisateur pour la détermination des caractéristiques couleur de l'écran d'affichage est en outre **caractérisé par** :

- la création d'un fichier de caractérisation de l'écran d'affichage comprenant le jeu de caractéristiques d'affichage de couleurs de l'écran d'affichage.

26. Le procédé selon la revendication 25, **caractérisé en outre par** :

la fourniture du fichier de caractérisation au client utilisateur.

**27.** Le procédé selon la revendication 25, **caractérisé en outre par** :

la fourniture du fichier de caractérisation au serveur d'images.

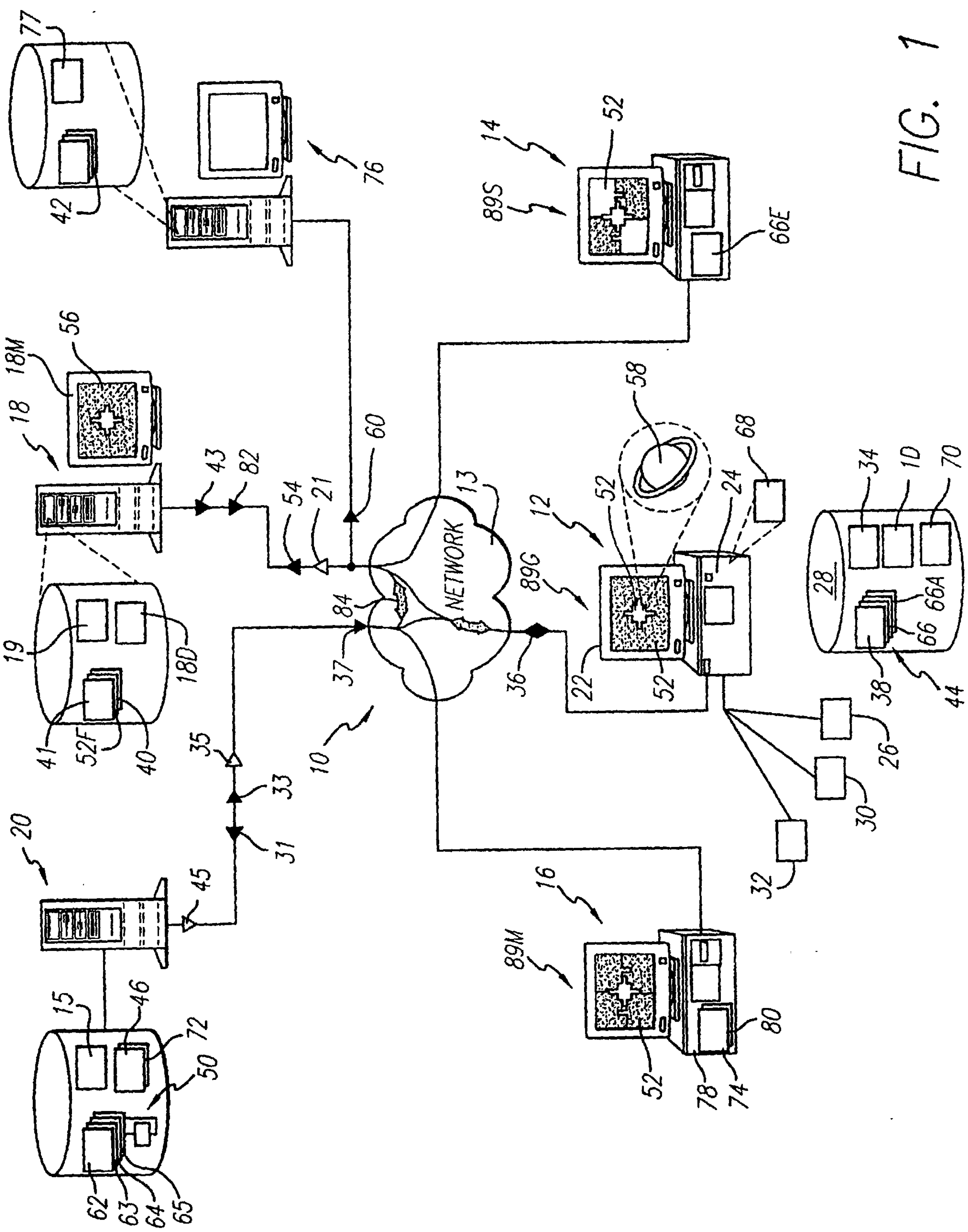


FIG. 1

FIG. 2

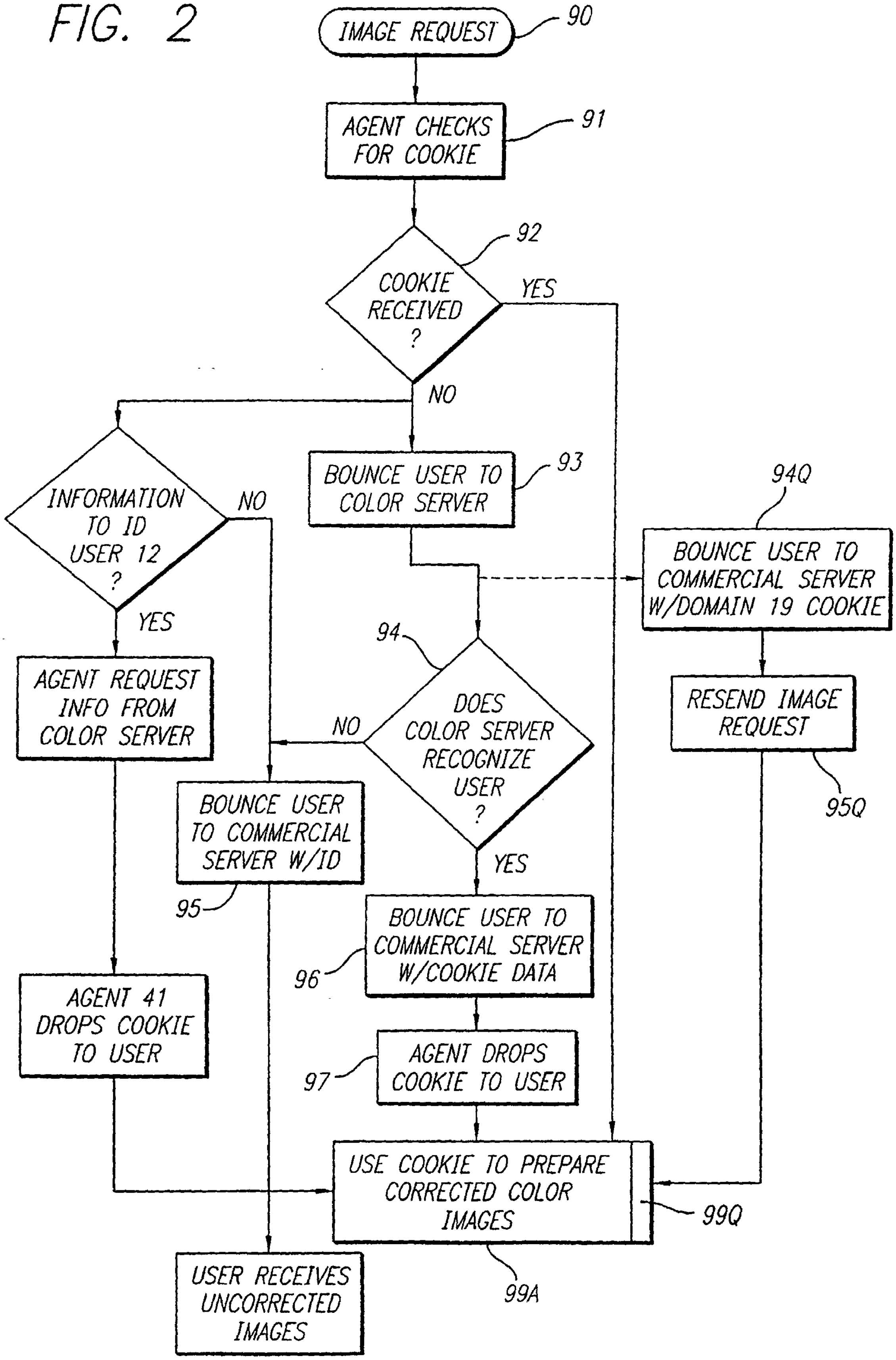
IMAGE REQUEST
90
AGENT CHECKS FOR COOKIE
91
COOKIE RECEIVED ?
92
YES
NO
BOUNCE USER TO COLOR SERVER
93
INFORMATION TO ID USER 12 ?
NO
YES
94Q
BOUNCE USER TO COMMERCIAL SERVER W/DOMAIN 19 COOKIE
94
DOES COLOR SERVER RECOGNIZE USER ?
NO
YES
AGENT REQUEST INFO FROM COLOR SERVER
RESEND IMAGE REQUEST
95Q
BOUNCE USER TO COMMERCIAL SERVER W/ID
95
BOUNCE USER TO COMMERCIAL SERVER W/COOKIE DATA
96
AGENT 41 DROPS COOKIE TO USER
AGENT DROPS COOKIE TO USER
97
USE COOKIE TO PREPARE CORRECTED COLOR IMAGES
99Q
99A
USER RECEIVES UNCORRECTED IMAGES

FIG. 3A

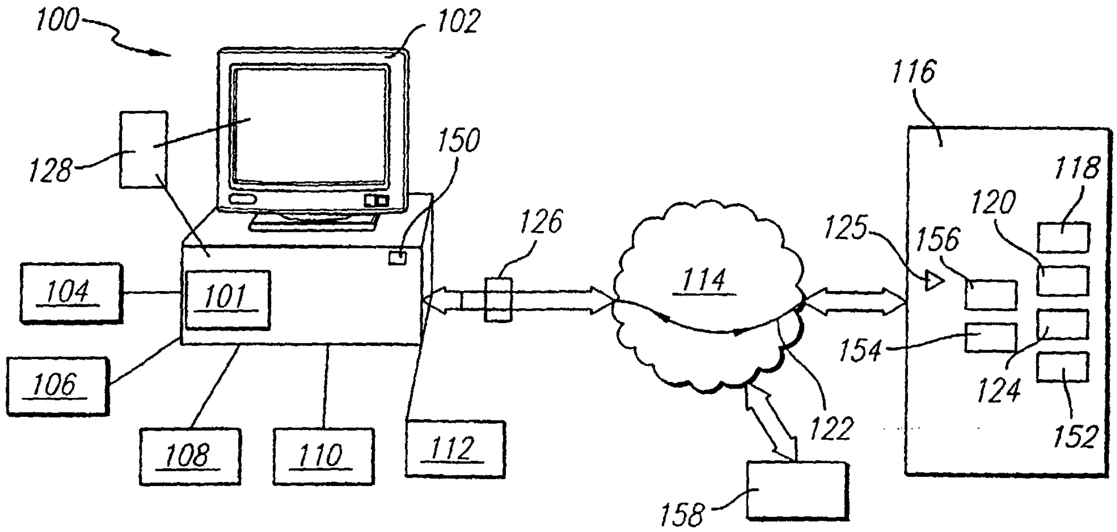
100
102
116
128
150
118
120
126
125
156
114
104
101
154
106
124
122
152
108
110
112
158

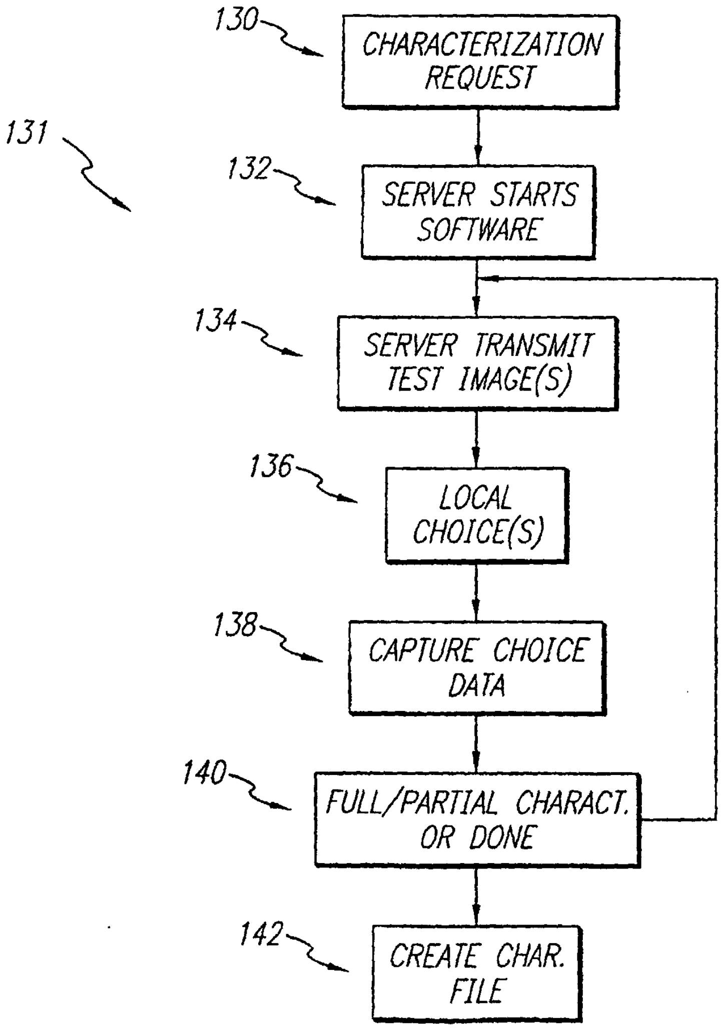
130
CHARACTERIZATION REQUEST
131
132
SERVER STARTS SOFTWARE
134
SERVER TRANSMIT TEST IMAGE(S)
136
LOCAL CHOICE(S)
138
CAPTURE CHOICE DATA
140
FULL/PARTIAL CHARACT. OR DONE
142
CREATE CHAR. FILE

FIG. 3B

FIG. 4

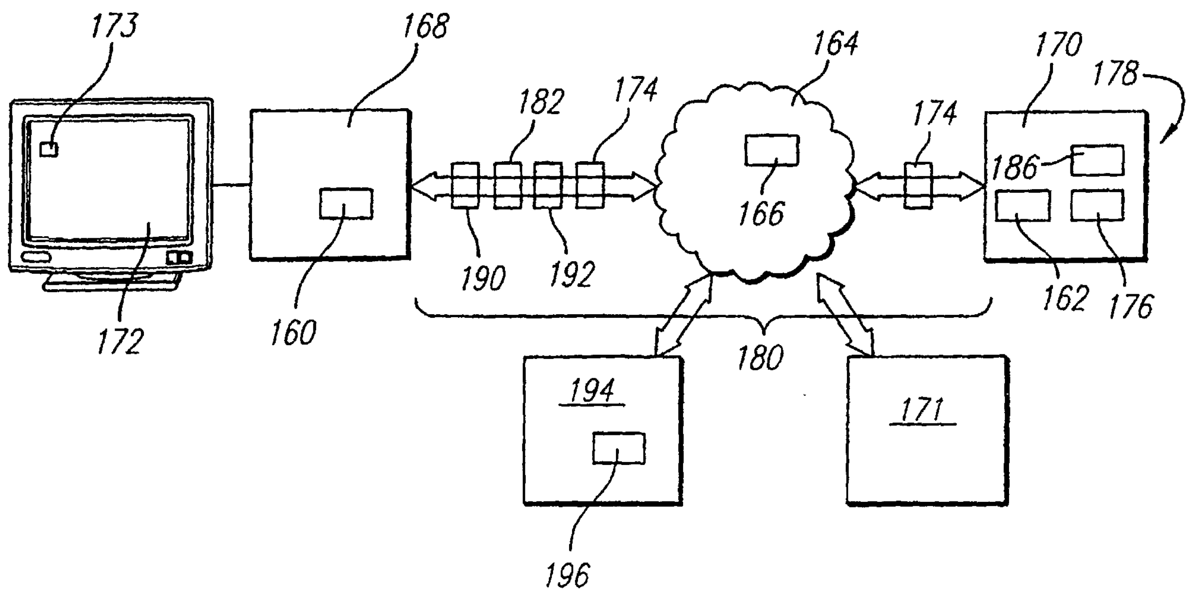
173
168
164
170
178
182
174
174
186
166
190
192
162
176
172
160
180
194
171
196

FIG. 5A

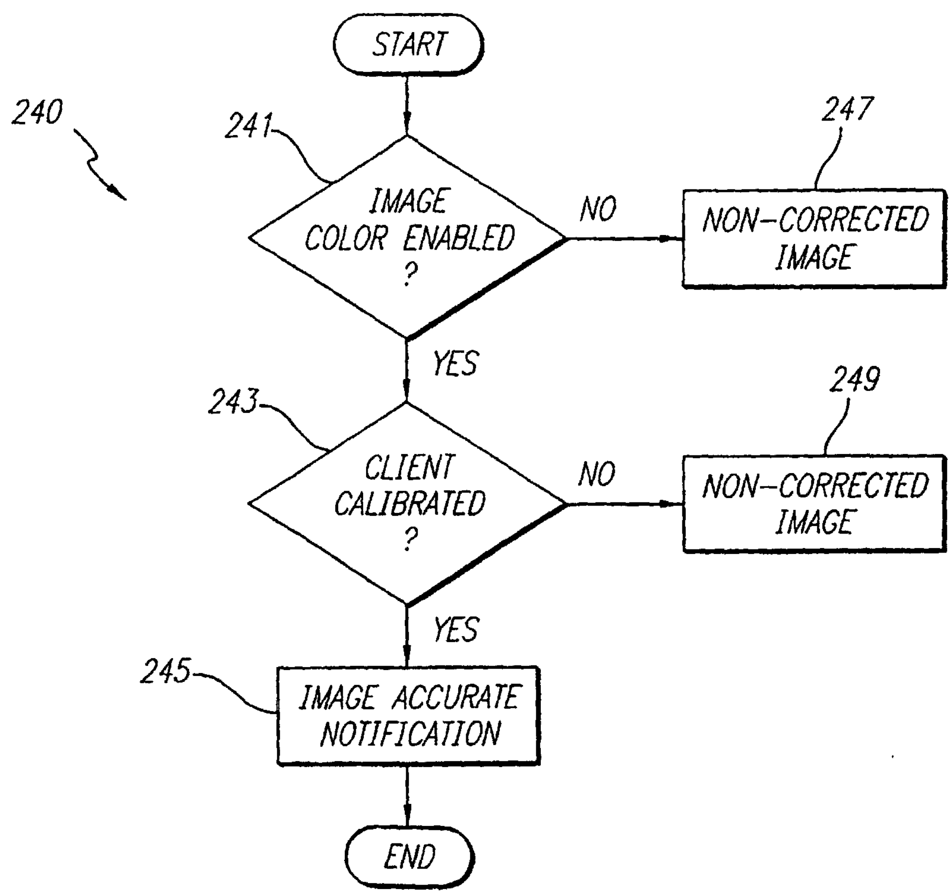
START
240
241
IMAGE COLOR ENABLED ?
NO
247
NON-CORRECTED IMAGE
YES
243
CLIENT CALIBRATED ?
NO
249
NON-CORRECTED IMAGE
YES
245
IMAGE ACCURATE NOTIFICATION
END

FIG. 5B

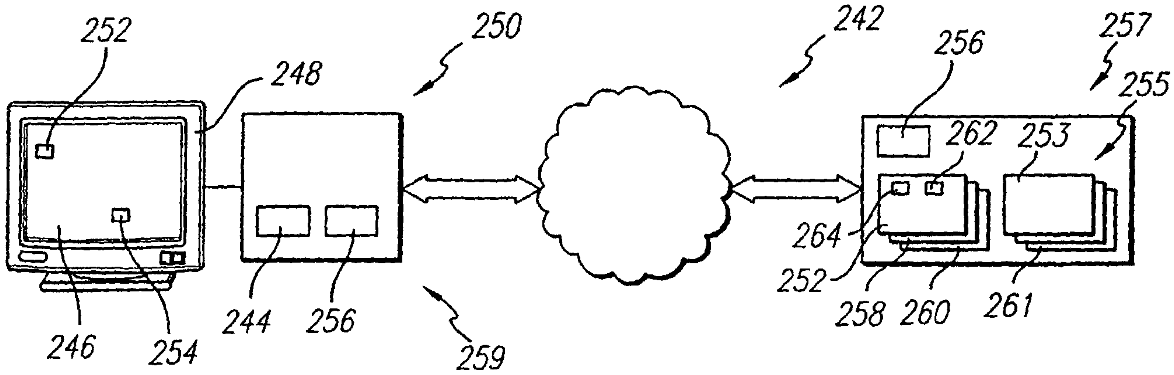


FIG. 6A

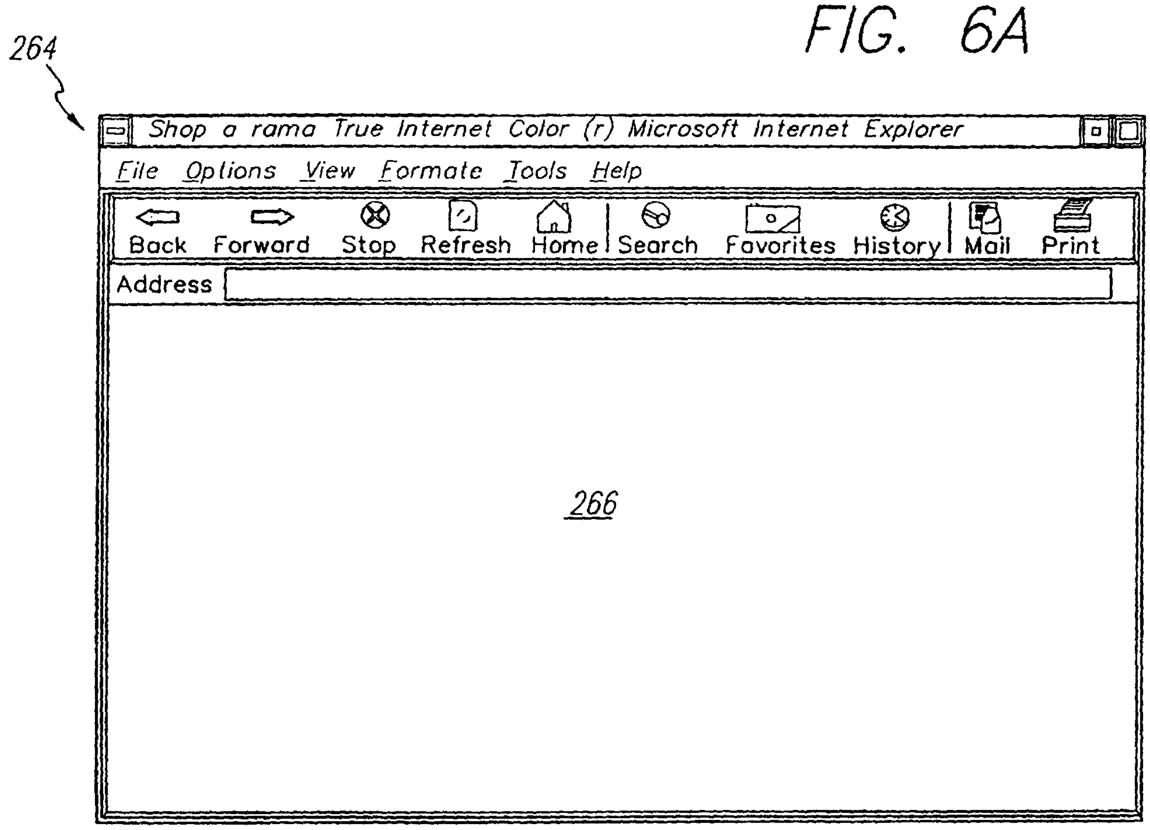


FIG. 6B

270

```
<HTML>
<HEAD>
<TITLE> SHOP-O-RAMA TRUE INTERNET COLOR(R)</TITLE>
</HEAD>
</HTML>
```

268

FIG. 7

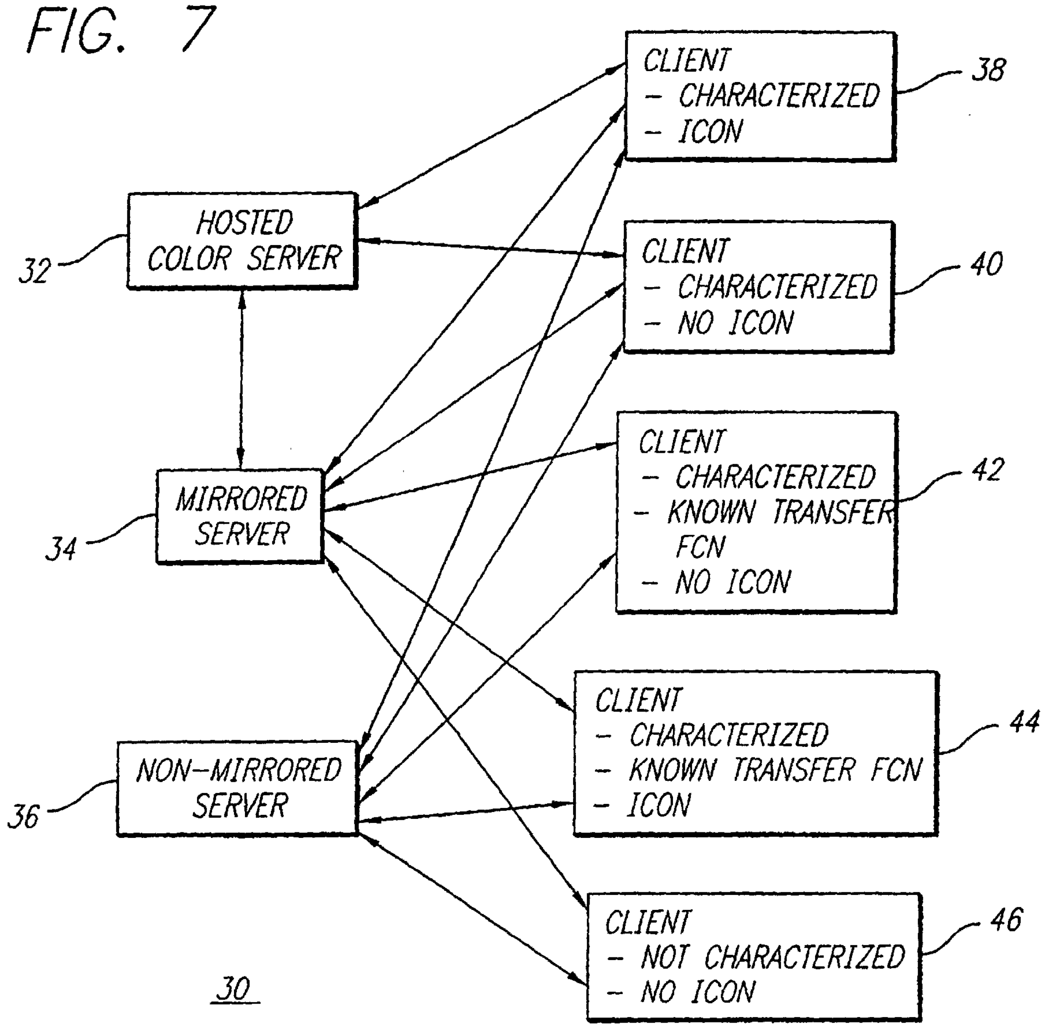
CLIENT
- CHARACTERIZED
- ICON
38
HOSTED
COLOR SERVER
32
CLIENT
- CHARACTERIZED
- NO ICON
40
CLIENT
- CHARACTERIZED
- KNOWN TRANSFER
FCN
- NO ICON
42
MIRRORED
SERVER
34
CLIENT
- CHARACTERIZED
- KNOWN TRANSFER FCN
- ICON
44
NON-MIRRORED
SERVER
36
CLIENT
- NOT CHARACTERIZED
- NO ICON
46
30

FIG. 8

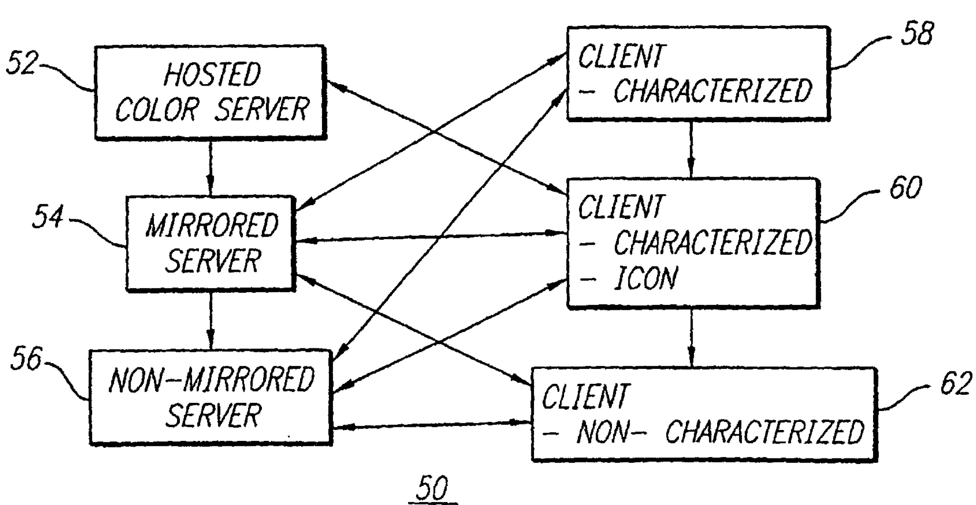
52
HOSTED
COLOR SERVER
CLIENT
- CHARACTERIZED
58
54
MIRRORED
SERVER
CLIENT
- CHARACTERIZED
- ICON
60
56
NON-MIRRORED
SERVER
CLIENT
- NON- CHARACTERIZED
62
50

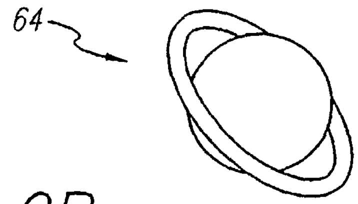


FIG. 9A

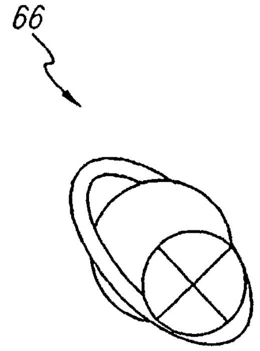


FIG. 9B

FIG. 10

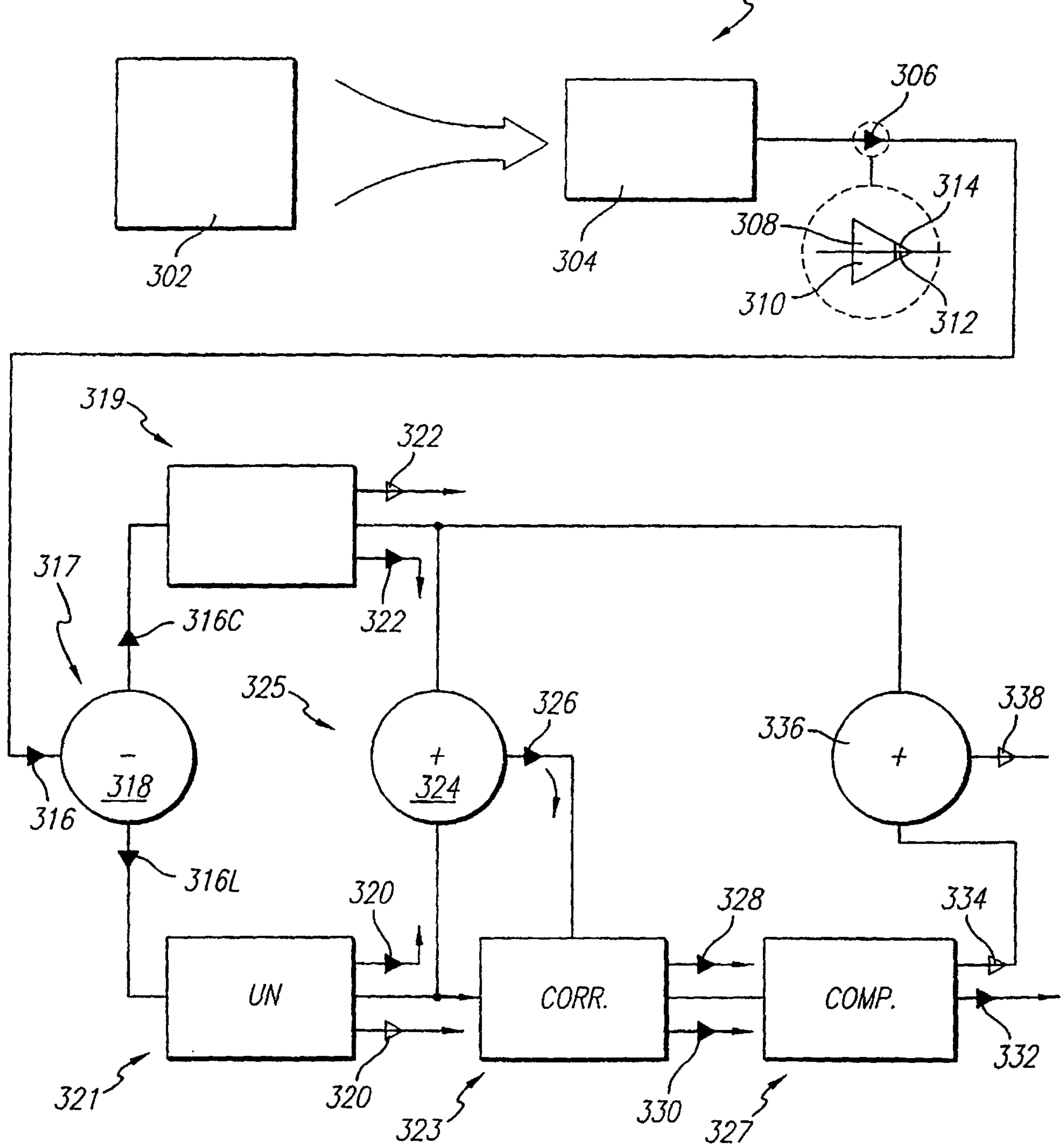

FIG. 11

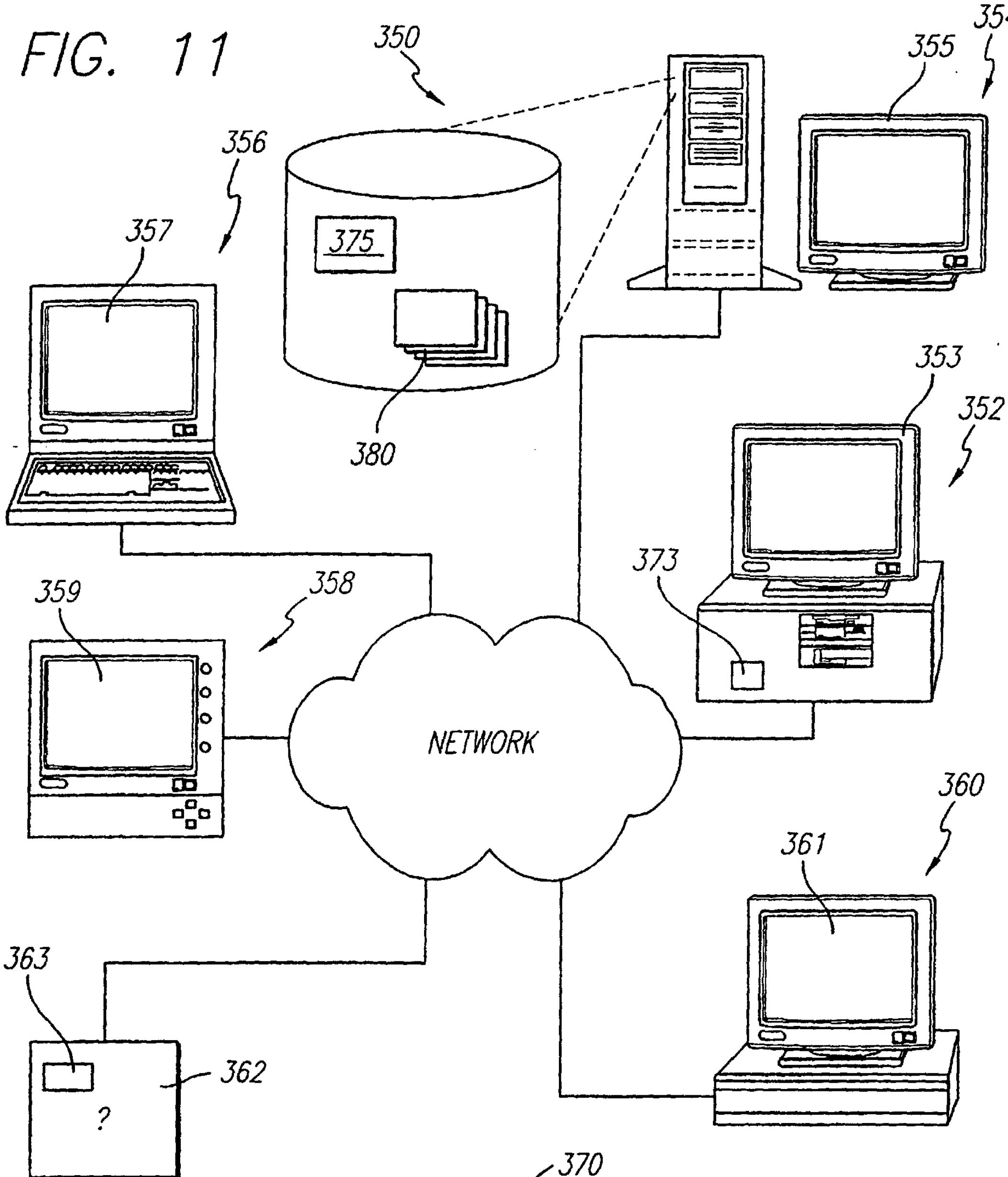
350
354
355
356
357
375
380
353
352
373
359
358
NETWORK
360
361
363
362
?

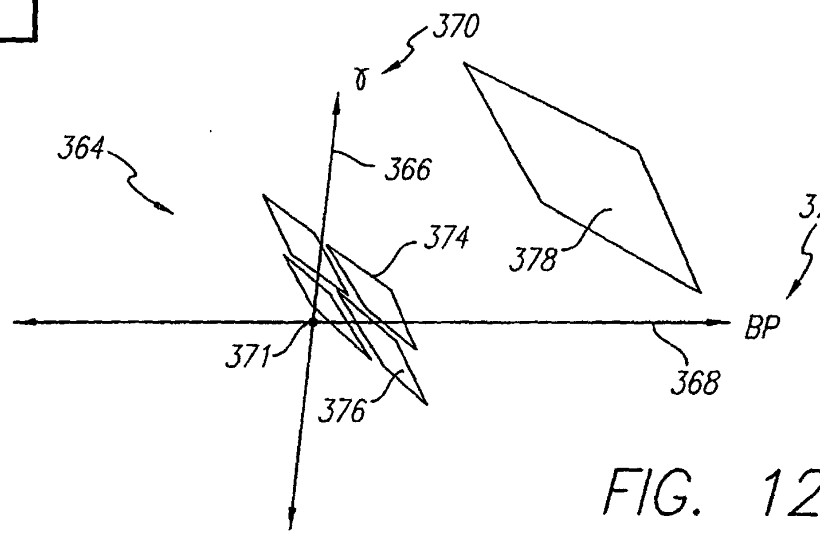
370
γ
364
366
372
374
378
BP
371
368
376

FIG. 12

FIG. 13

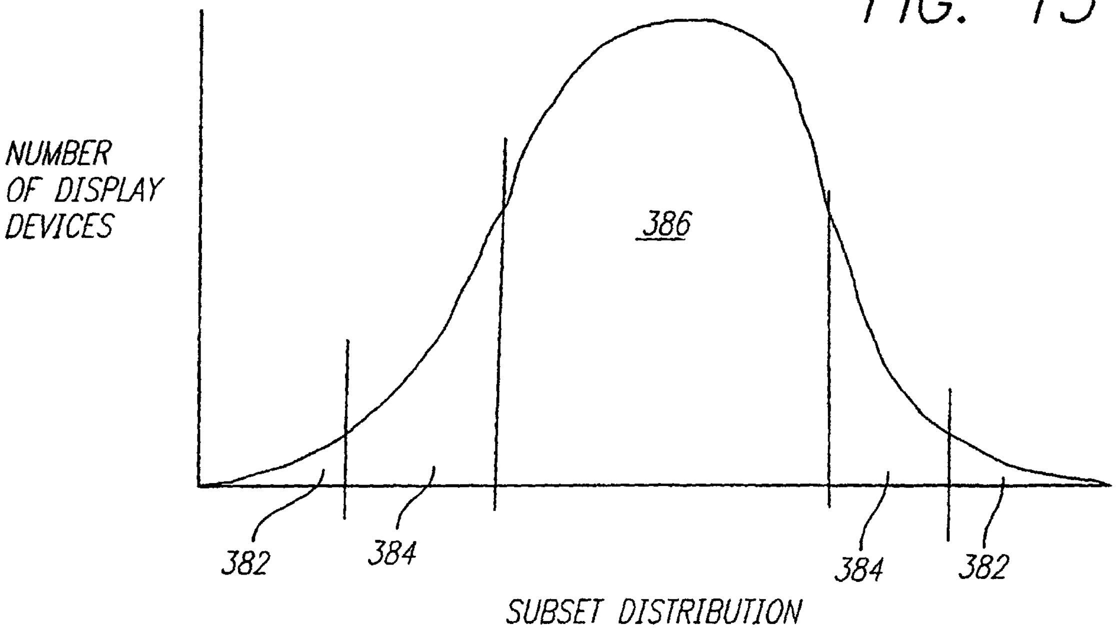
NUMBER
OF DISPLAY
DEVICES
386
382
384
384
382
SUBSET DISTRIBUTION

FIG. 14

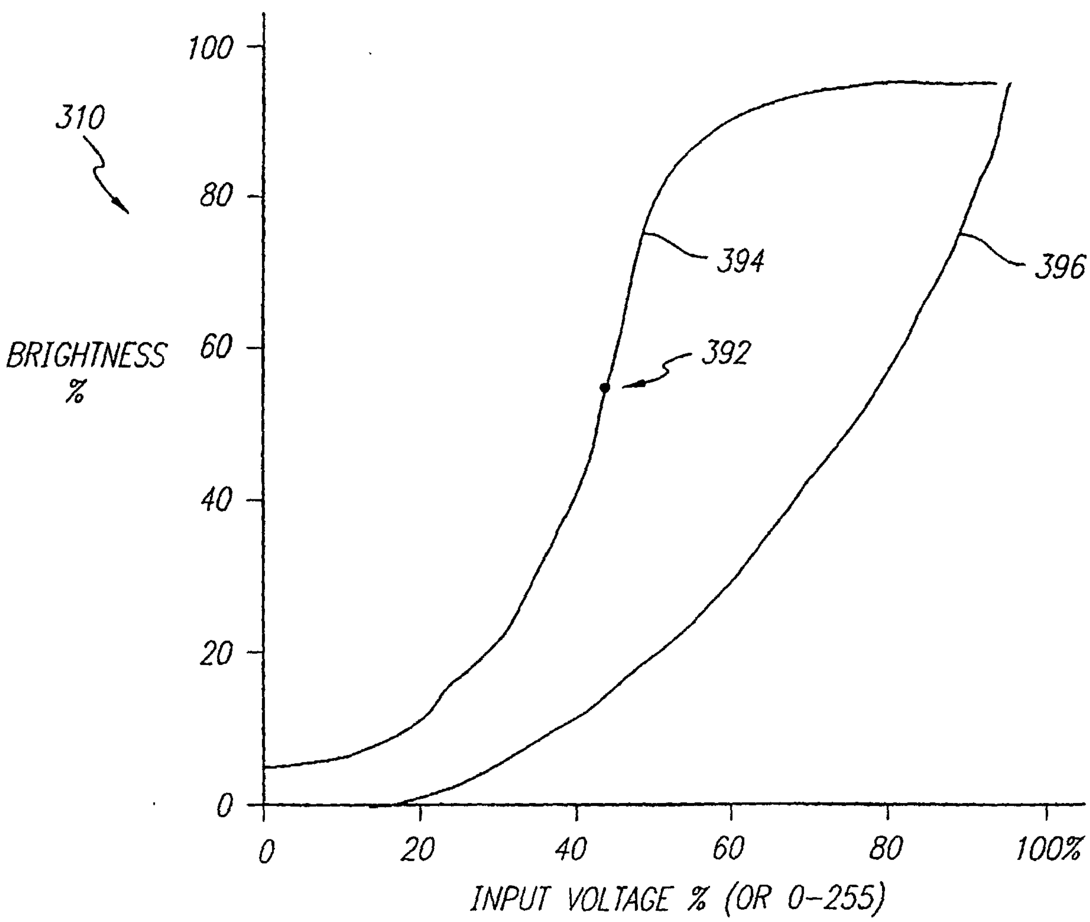
310
100
80
60
40
20
0
BRIGHTNESS
%
394
396
392
0
20
40
60
80
100%
INPUT VOLTAGE % (OR 0-255)

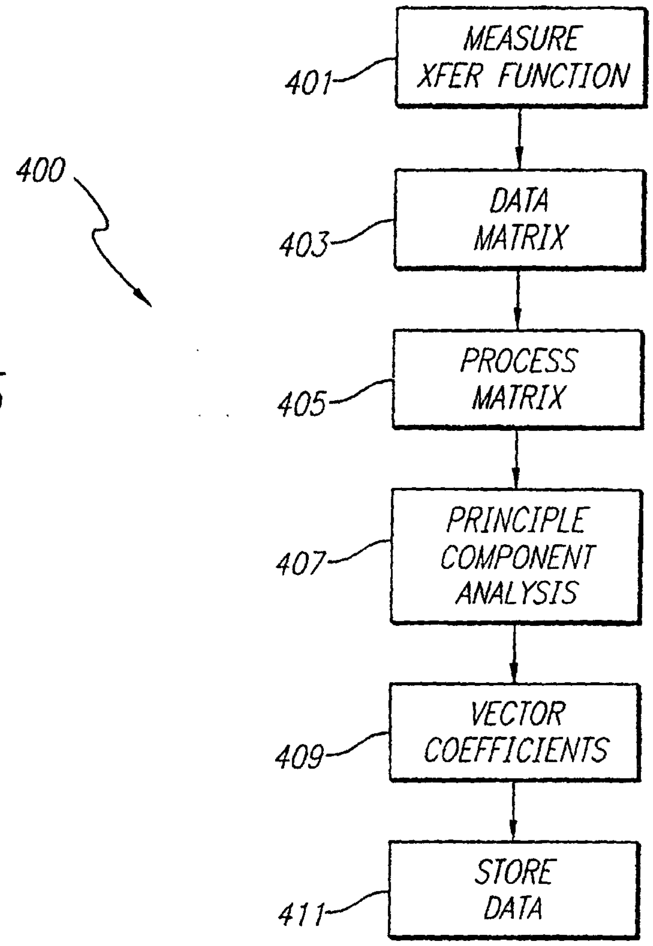
400
MEASURE XFER FUNCTION
401
DATA MATRIX
403
PROCESS MATRIX
405
PRINCIPLE COMPONENT ANALYSIS
407
VECTOR COEFFICIENTS
409
STORE DATA
411

FIG. 15

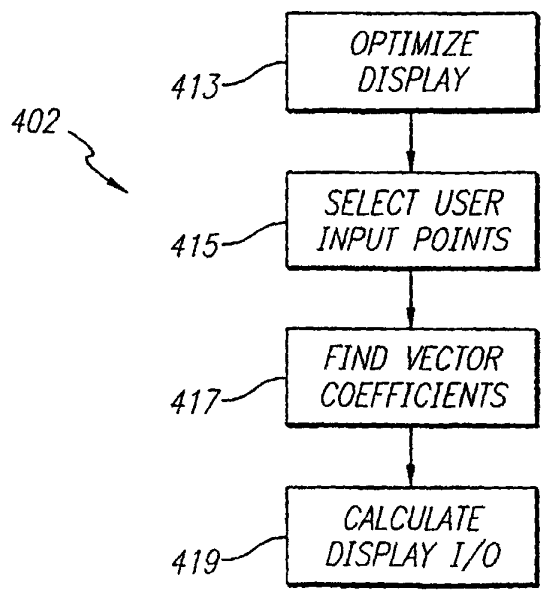
402
OPTIMIZE DISPLAY
413
SELECT USER INPUT POINTS
415
FIND VECTOR COEFFICIENTS
417
CALCULATE DISPLAY I/O
419

FIG. 16

FIG. 17

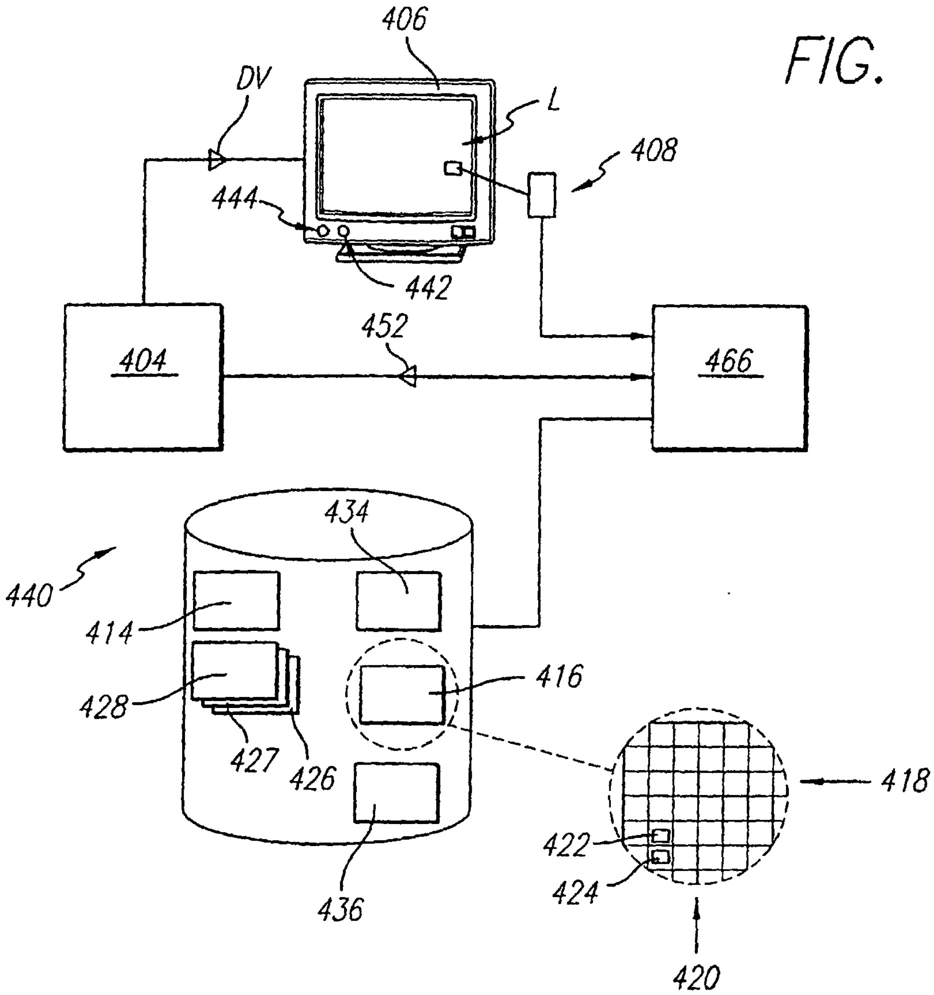
406
DV
L
408
444
442
452
404
466
434
440
414
416
428
427
426
418
422
424
436
420

FIG. 18

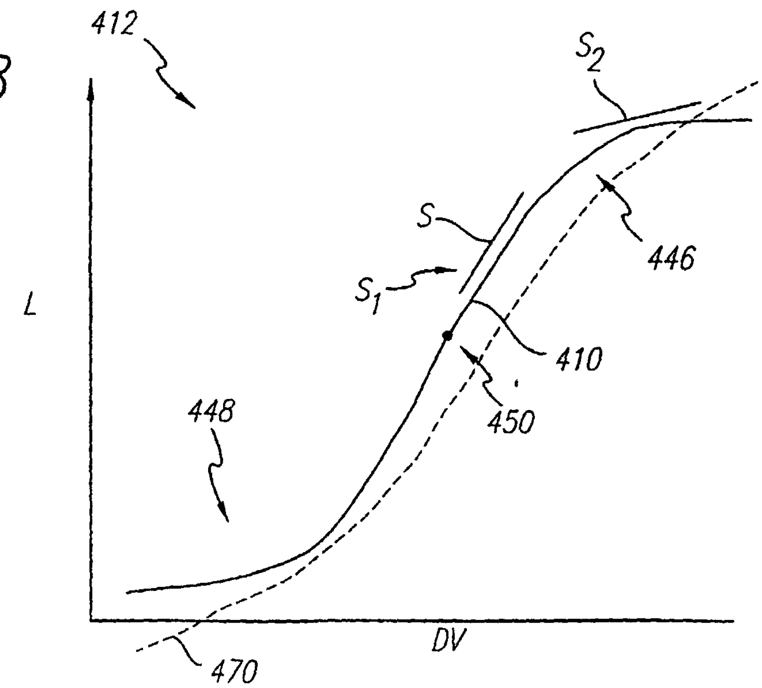
412
$S_2$
S
$S_1$
446
L
410
450
448
DV
470

FIG. 19

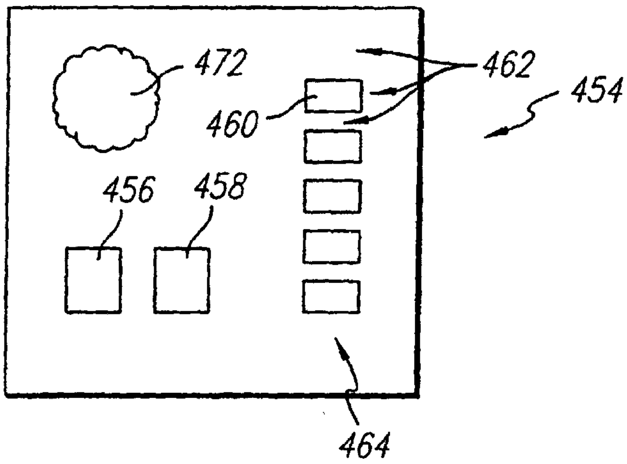


FIG. 20

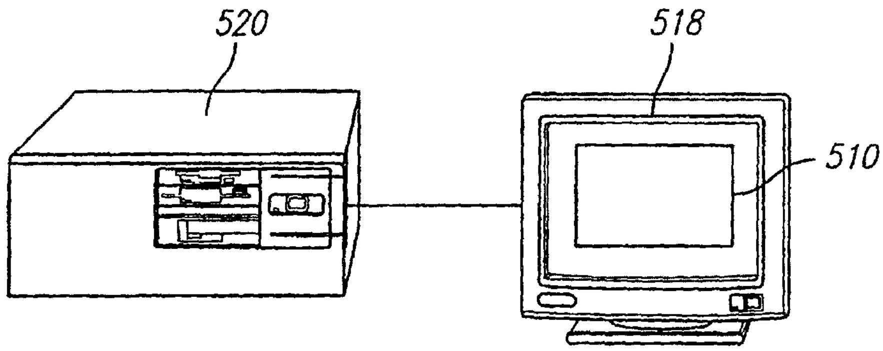


FIG. 21

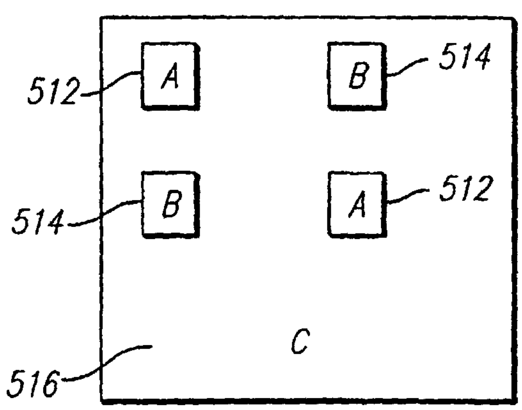

FIG. 22

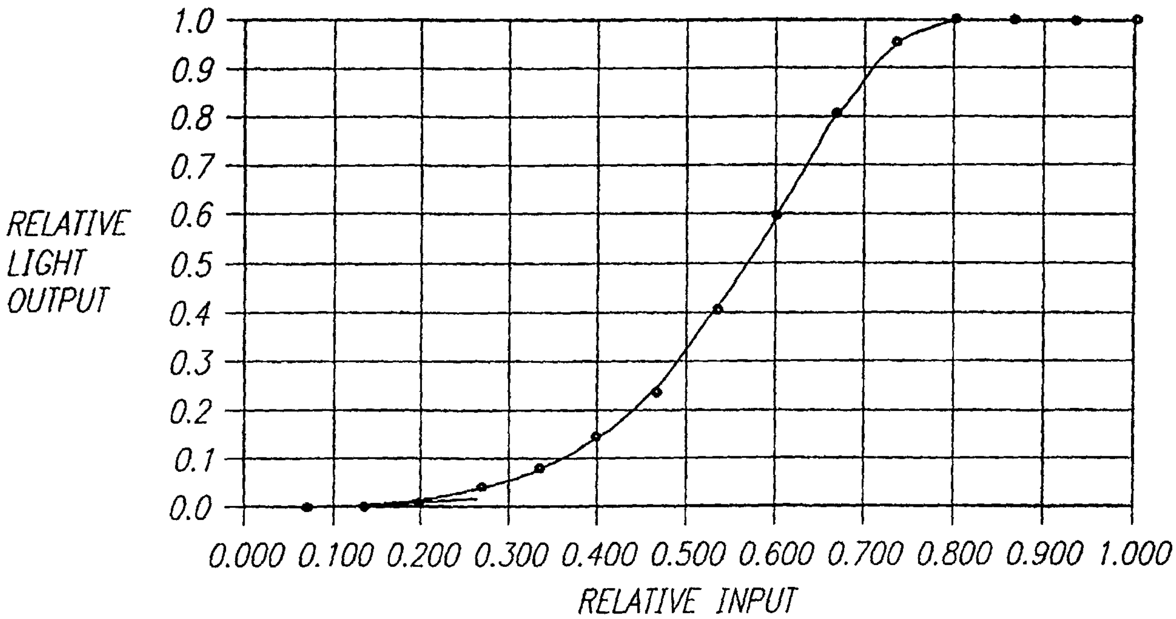
1.0
0.9
0.8
0.7
0.6
0.5
0.4
0.3
0.2
0.1
0.0
RELATIVE LIGHT OUTPUT
0.000 0.100 0.200 0.300 0.400 0.500 0.600 0.700 0.800 0.900 1.000
RELATIVE INPUT

FIG. 23

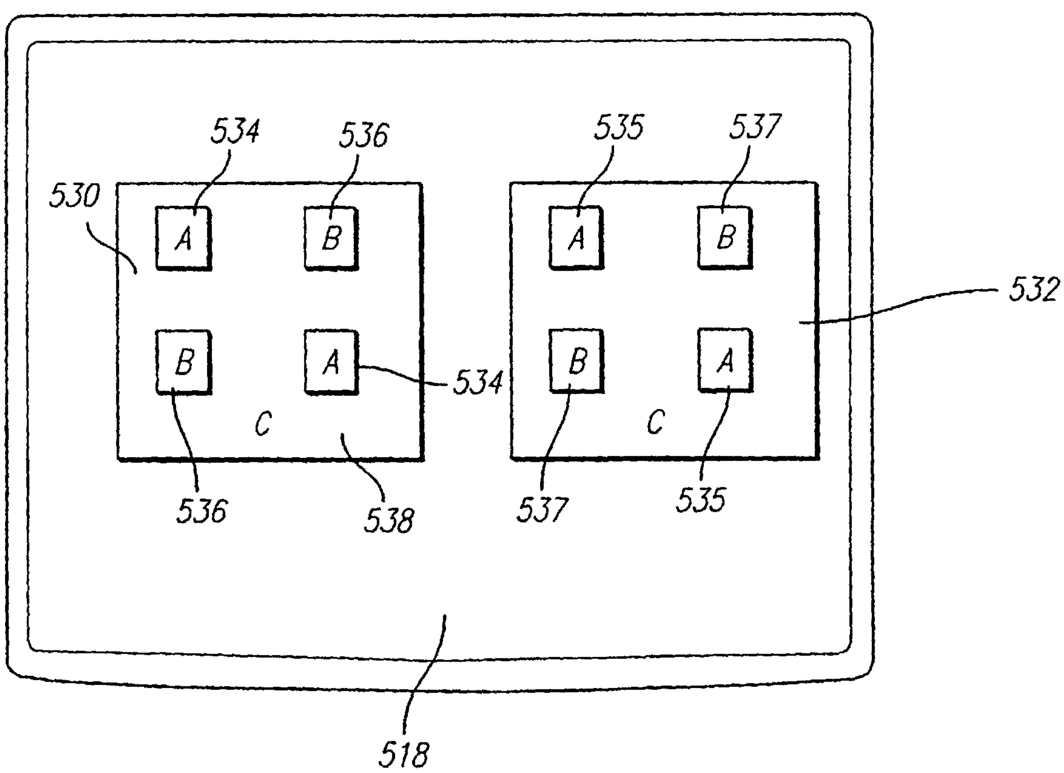
534
536
535
537
530
A
B
A
B
532
B
A
534
B
A
C
C
536
538
537
535
518

FIG. 24

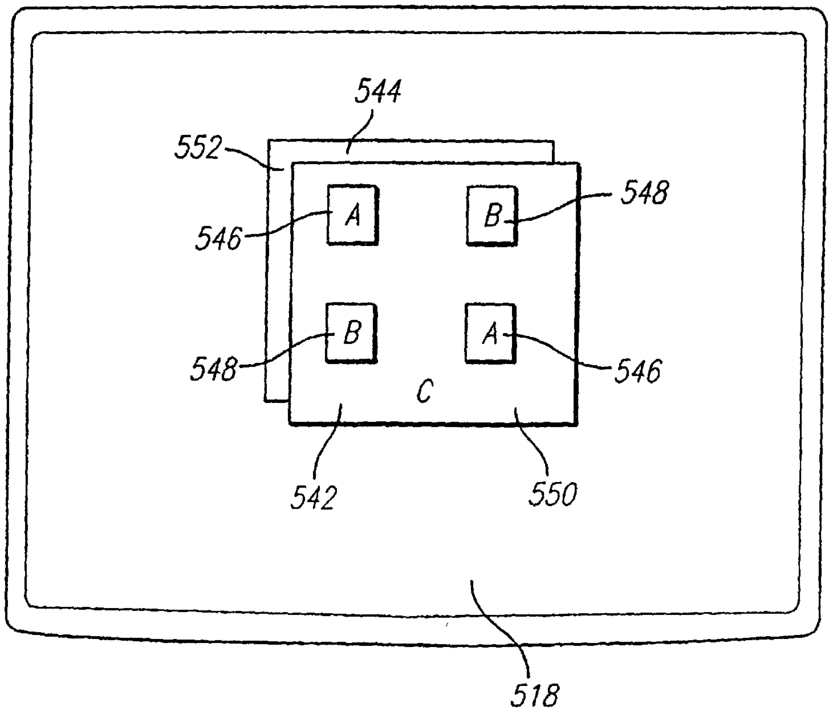


FIG. 25

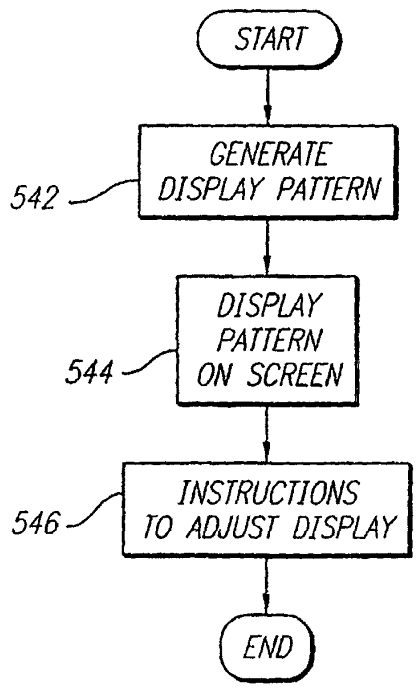


FIG. 26

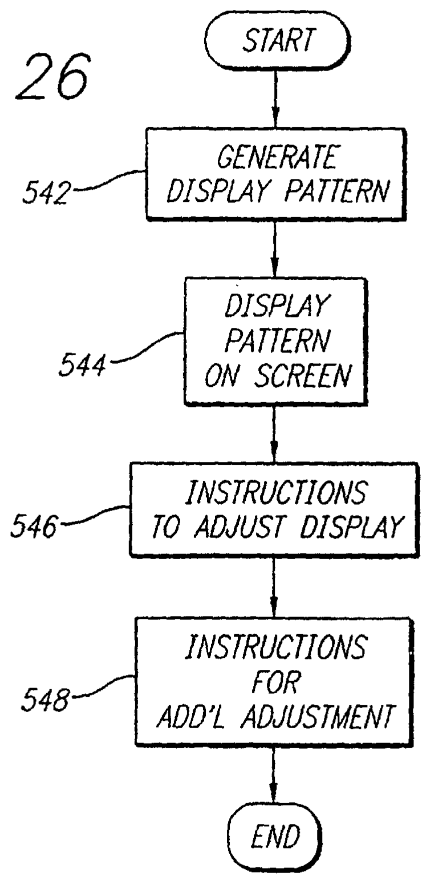

FIG. 27

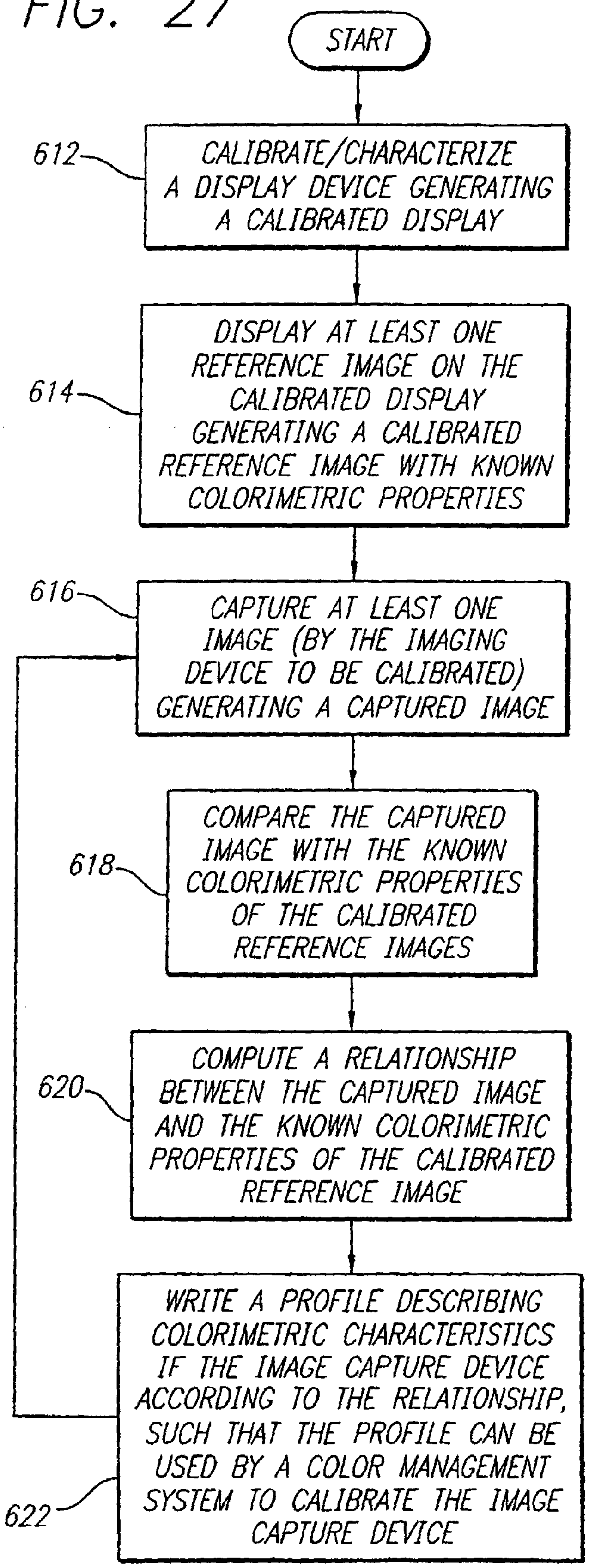
START
612
CALIBRATE/CHARACTERIZE A DISPLAY DEVICE GENERATING A CALIBRATED DISPLAY
614
DISPLAY AT LEAST ONE REFERENCE IMAGE ON THE CALIBRATED DISPLAY GENERATING A CALIBRATED REFERENCE IMAGE WITH KNOWN COLORIMETRIC PROPERTIES
616
CAPTURE AT LEAST ONE IMAGE (BY THE IMAGING DEVICE TO BE CALIBRATED) GENERATING A CAPTURED IMAGE
618
COMPARE THE CAPTURED IMAGE WITH THE KNOWN COLORIMETRIC PROPERTIES OF THE CALIBRATED REFERENCE IMAGES
620
COMPUTE A RELATIONSHIP BETWEEN THE CAPTURED IMAGE AND THE KNOWN COLORIMETRIC PROPERTIES OF THE CALIBRATED REFERENCE IMAGE
622
WRITE A PROFILE DESCRIBING COLORIMETRIC CHARACTERISTICS IF THE IMAGE CAPTURE DEVICE ACCORDING TO THE RELATIONSHIP, SUCH THAT THE PROFILE CAN BE USED BY A COLOR MANAGEMENT SYSTEM TO CALIBRATE THE IMAGE CAPTURE DEVICE

FIG. 28

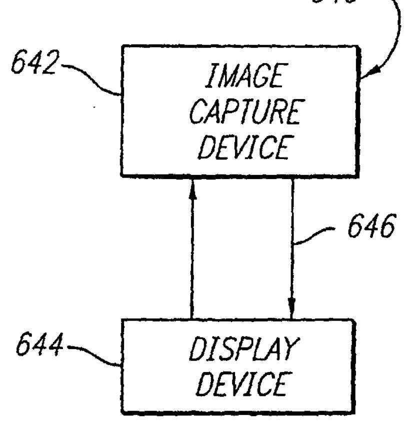
640
642
IMAGE CAPTURE DEVICE
646
644
DISPLAY DEVICE